# EUROPÄISCHE PATENTSCHRIFT

(11) **EP 1 915 833 B1**
(45) Veröffentlichungstag und Bekanntmachung des Hinweises auf die Patenterteilung: **23.05.2012**
(21) Anmeldenummer: 06764309.8
(22) Anmeldetag: 07.08.2006
(51) Int. Cl.: H04L 7/033, H04L 7/04

(54) **VERFAHREN UND VORRICHTUNG ZUM DEKODIEREN EINES SIGNALS**
METHOD AND DEVICE FOR DECODING A SIGNAL
PROCEDE ET DISPOSITIF POUR DECODER UN SIGNAL

(30) Priorität: 08.08.2005 DE 102005037263
(43) Veröffentlichungstag der Anmeldung: 30.04.2008
(73) Patentinhaber: ROBERT BOSCH GMBH, 70442 Stuttgart (DE)
(72) Erfinder: ROHATSCHEK, Andreas-Juergen, 73249 Wernau/Neckar (DE)
(86) Internationale Anmeldenummer: PCT/EP2006/065111
(87) Internationale Veröffentlichungsnummer: WO 2007/017491

(56) Entgegenhaltungen:
- EP-A- 0 562 183
- EP-A- 1 335 520
- DE-A1- 3 417 358
- DE-A1- 4 304 913
- US-A- 5 412 698

## Beschreibung

Die vorliegende Erfindung betrifft ein Verfahren zur Dekodierung eines Signals, das über mindestens eine Verbindungsleitung eines Datenübertragungssystems übertragen wird, in einem das Signal empfangenden Teilnehmer des Datenübertragungssystems nach dem Oberbegriff des Anspruchs 1. Die Erfindung betrifft außerdem ein Verfahren zur Dekodierung eines Signals nach dem Oberbegriff von Anspruch 15. Die Erfindung betrifft außerdem ein System zur Übertragung von Daten nach dem Oberbegriff des Anspruchs 26. Des Weiteren betrifft die vorliegende Erfindung einen Teilnehmer eines Datenübertragungssystems nach dem Oberbegriff des Anspruchs 28. Die Erfindung betrifft schließlich auch einen Kommunikations-Controller eines Teilnehmers eines Datenübertragungssystems nach dem Oberbegriff des Anspruchs 38.

### Stand der Technik

Die Vernetzung von Steuergeräten, Sensorik und Aktuatorik mit Hilfe eines Kommunikationssystems und einer Kommunikationsverbindung bspw. in Form eines Bussystems hat in den letzten Jahren beim Bau von modernen Kraftfahrzeugen oder auch im Maschinenbau, insbesondere im Werkzeugmaschinenbereich, als auch in der Automatisierung drastisch zugenommen. Synergieeffekte durch Verteilung von Funktionen auf mehrere Steuergeräte können dabei erzielt werden. Man spricht hierbei von verteilten Systemen.

Die Kommunikation zwischen verschiedenen Teilnehmern eines solchen Datenübertragungssystems findet mehr und mehr über ein Bussystem statt. Der Kommunikationsverkehr auf dem Bussystem, Zugriffs- und Empfangsmechanismen, sowie Fehlerbehandlung werden über ein Protokoll geregelt. Ein bekanntes Protokoll ist beispielsweise das FlexRay-Protokoll, wobei derzeit die FlexRay-Protokollspezifikation v2.1 zu Grunde liegt. Bei FlexRay handelt es sich um ein schnelles, deterministisches und fehlertolerantes Bussystem, insbesondere für den Einsatz in Kraftfahrzeugen. Das FlexRay-Protokoll arbeitet nach dem Prinzip des Time Division Multiple Access (TDMA), wobei den Teilnehmern bzw. den zu übertragenden Botschaften feste Zeitschlitze zugewiesen werden, in denen sie einen exklusiven Zugriff auf die Kommunikationsverbindung haben. Die Zeitschlitze wiederholen sich dabei in einem festgelegten Zyklus, so dass der Zeitpunkt, zu dem eine Botschaft über den Bus übertragen wird, exakt vorausgesagt werden kann und der Buszugriff deterministisch erfolgt.

Um die Bandbreite für die Übertragung von Botschaften auf dem Bussystem optimal zu nutzen, unterteilt FlexRay den Zyklus in einen statischen und einen dynamischen Teil. Die festen Zeitschlitze befinden sich dabei im statischen Teil am Anfang eines Buszyklusses. Im dynamischen Teil werden die Zeitschlitze dynamisch vorgegeben. Darin wird nun der exklusive Buszugriff jeweils nur für eine kurze Zeit, für die Dauer mindestens eines sogenannten Minislots, ermöglicht. Nur wenn innerhalb eines Minislots ein Buszugriff erfolgt, wird der Zeitschlitz um die benötigte Zeit verlängert. Damit wird Bandbreite also nur verbraucht, wenn sie auch tatsächlich benötigt wird. Dabei kommuniziert FlexRay über eine oder zwei physikalisch getrennte Leitungen mit einer Datenrate von jeweils maximal 10 Mbit/sec. Selbstverständlich kann FlexRay aber auch mit niedrigeren Datenraten betrieben werden. Die beiden Kanäle entsprechen dabei der physikalischen Schicht, insbesondere des sogenannten OSI (Open System Interconnection) Schichtenmodells. Diese dienen hauptsächlich der redundanten und damit fehlertoleranten Übertragung von Botschaften, können jedoch auch unterschiedliche Botschaften übertragen, wodurch sich dann die Datenrate verdoppeln würde. Es ist auch denkbar, dass sich das über die Verbindungsleitungen übertragene Signal aus der Differenz von über die beiden Leitungen übertragenen Signalen ergibt. Die physikalische Schicht ist derart ausgestaltet, dass sie eine elektrische aber auch optische Übertragung des oder der Signale über die Leitung(en) oder eine Übertragung auf anderem Wege ermöglicht.

Um synchrone Funktionen zu realisieren und die Bandbreite durch kleine Abstände'zwischen zwei Botschaften zu optimieren, benötigen die Teilnehmer in dem Kommunikationsnetzwerk eine gemeinsame Zeitbasis, die sogenannte globale Zeit. Für die Uhrensynchronisation werden Synchronisationsnachrichten im statischen Teil des Zyklus übertragen, wobei mit Hilfe eines speziellen Algorithmus entsprechend der FlexRay-Spezifikation die lokale Uhrzeit eines Teilnehmers so korrigiert wird, dass alle lokalen Uhren zu einer globalen Uhr synchron laufen.

Bei der Übertragung von Daten oder Botschaften über ein solches Bussystem werden Impulse verzerrt, weil High-to-Low bzw. Low-to-High-Flanken auf dem Übertragungsweg unterschiedlich stark verzögert werden. Wird der gesendete Impuls im Empfänger mit dem dort vorliegenden Abtasttakt (der sogenannten Sampling Rate) mehrfach (zum Beispiel n-mal pro Bit) abgetastet, so entscheidet die Lage des Abtastpunktes, d.h. die Auswahl genau eines dieser n Abtastwerte, ob das Datum richtig oder falsch abgetastet wird. Das ist insbesondere dann schwierig, wenn der Abtastzeitpunkt auf eine Flanke des Signals Bezug nimmt und relativ dazu auch über viele Perioden des Abtasttaktes mehrere binäre Datenwerte (Bits) des Senders auswertet. Hier wirkt sich zusätzlich zu einer Impulsverzerrung auch noch die Taktfrequenzabweichung zwischen Sender und Empfänger aus. Es hat sich gezeigt, dass die starre Festlegung des Abtastzeitpunktes ohne Berücksichtigung der asymmetrischen Verzögerungen auf den unterschiedlichen Übertragungswegen zu Problemen führt.

Durch die starre Wahl des Abtastzeitpunktes pro Bit (zum Beispiel bei n=8 Abtastwerten pro Bit auf 5, in der Mitte eines Bits) ist sowohl der Einfluss der asymmetrischen Verzerrung als auch die Frequenzabweichung und die zusätzliche Zeitdiskretisierung durch die Abtastung ein Problem und stellt hohe Anforderungen an den Übertragungskanal. Eine Erhöhung der Flankensteilheit zur Verringerung der asymmetrischen Verzögerungen brächte zwar Vorteile für das Timing, würde aber andererseits technisch anspruchsvollere und damit teurere Komponenten voraussetzen und zudem das EMV-Verhalten des Datenübertragungssystems ungünstig beeinflussen. Aber je nach Impulsverzerrung läuft man Gefahr, entweder an der einen oder der anderen Bitgrenze das falsche Datum auszuwerten.

Bei der Realisierung von FlexRay-Datenübertragungssystemen, insbesondere bei komplexen Systemen umfassend mehrere Sternkoppler und passive Netzwerke, hat sich zudem gezeigt, dass die dort auftretenden asymmetrischen Verzögerungszeiten so groß sind, dass sie ein durch das FlexRay-Protokoll vorgegebenes Zeitbudget übersteigen. Gemäß FlexRay-Protokoll wird mit fallender BSS (Byte Start Sequence)-Flanke ein Abtastzähler synchronisiert, d.h. zurückgesetzt. Bei einem Zählerstand von 5 wird abgetastet. Bei einer 8-fachen Überabtastung (sogenanntes Oversampling), wie sie derzeit in FlexRay vorgesehen ist, verbleiben zwischen dem Abtastzeitpunkt (5. Abtastwert) und dem 8. Abtastwert also noch 3 Abtasttakte, die bei einem Kommunikationscontroller-Takt von 80 MHz jeweils 12,5 ns, in der Summe also einem Zeitbudget von 37,5 ns entsprechen. Dieses Zeitbudget dient eigentlich zum Ausgleich von asymmetrischen Verzögerungen aufgrund der Differenz von fallender zu steigender Flankensteilheit. Falls jedoch - wie dies bei komplexen Netztopologien der Fall sein kann - die asymmetrische Verzögerung das vorgesehene Zeitbudget übersteigt, führt dies dazu, dass bei einer Abtastung beim 5. Abtasttakt (Zählerstand des Abtastzählers auf 5) ein falscher Wert ermittelt wird, weil dasjenige Bit, das eigentlich hätte abgetastet werden sollen, auf Grund der asymmetrischen Verzögerung schon zu einem früheren Zeitpunkt anlag und durch den frühen Flankenwechsel nicht mehr anliegt. Eine analoge Behandlung gilt für eine asymmetrische Verzögerung nach spät. Dann steht ein Zeitbudget von 4 Abtasttakten entsprechend 50 ns zur Verfügung. Die Folge eines Übersteigens des Zeitbudgets nach früh oder spät sind Dekodierungsfehler, es werden also falsche Daten empfangen.

Diese Dekodierungsfehler können zwar durch geeignete Fehlererkennungsalgorithmen erkannt werden, so dass eine erneute Übertragung des Bits oder des gesamten Datenrahmens veranlasst werden kann. Als Fehlererkennungsalgorithmus kann beispielsweise ein Cyclic Redundancy Check (CRC) eingesetzt werden. Der Nachteil eines häufigen Ansprechens des Fehlererkennungsalgorithmus ist jedoch in der damit verbundenen schlechteren Verfügbarkeit des Datenübertragungssystems zu sehen.

Zusammenfassend kann gesagt werden, dass durch das FIexRay-Protokoll Vorgaben gemacht werden, die der Physical Layer - zumindest bei komplexen Netztopologien - nicht halten kann.

In der DE 4 304 913 A1 und der DE 3 417 358 A1 wird offenbart, wie jeweils ein interner Empfangsbitstrom durch Einstellen von Phasenwert und Korrektur eines Offsets relativ zum Taktbezug des Empfängers eingestellt wird. Diese Maßnahmen sind allerdings nicht geeignet, um auf asymmetrische Verzögerungen, speziell auf stochastische, also nicht-systematische, asymmetrische Verzögerungen zu reagieren.

Aus der EP 1335 520 ist eine Methode bekannt, mit Übertastung eines digitalen Eingangssignals auf kleinere asymmetrische Verzögerungen zu reagieren.

### Vorteile der Erfindung

Ein entscheidender Unterschied zum bekannten Stand der Technik ist darin zu sehen, dass nicht mehr zu einem bestimmten Abtastzeitpunkt, weder zu einem fest vorgegebenen noch zu einem variablen Abtastzeitpunkt, abgetastet wird. Vielmehr werden die aufgrund einer n-fachen Überabtastung vorliegenden Abtastwerte bzw. ein Teil dieser Abtastwerte zur Ermittlung des Werts des aktuellen Bits herangezogen. Es werden mehrere Abtastwerte zur Ermittlung des anliegenden Bitwertes herangezogen, um eine eindeutige, zuverlässige Aussage über den Bitwert treffen zu können. Auf diese Weise kann das in dem Datenübertragungssystem zur Verfügung stehende Zeitbudget asymmetrischer Verzögerungen deutlich vergrößert, in etwa verdoppelt werden.

Der erfindungsgemäße Vorschlag wird beispielhaft anhand eines FlexRay-Datenübertragungssystems beschrieben. Dies ist aber nicht als Einschränkung im Hinblick auf die Erfindung zu verstehen. Die vorliegende Erfindung kann für viele verschiedene Arten von Datenübertragungssystemen verwendet werden und ist ohne weiteres auf vergleichbare Systeme übertragbar.

Erfindungsgemäß wird hinreichend vor und nach einer möglichen Flankenposition abgetastet. Es wird nicht an einer bestimmten Abtastposition abgetastet, sondern es wird der Ort einer Flanke erkannt. Bei einer n-fachen Überabtastung kann ein Flankenwechsel mit der Periodizität von n Abtasttakten erfolgen. Die sogenannte Kann-Flanken-Position (KFP) bezeichnet die Position eines potentiellen Flankenwechsels ohne stochastischen oder systematischen Einfluss eines EMV-Jitters oder einer anderen asymmetrischen Verzögerung. Wenn die Dekodierung auf eine fallende Flanke synchronisiert wird, beispielsweise auf die fallende BSS (Byte Start Sequence)-Flanke, wird die nominale Position der steigenden Kann-Flanken-Wechsel durch asymmetrische Verzögerungszeiten beeinflusst. Die nominale Position der fallenden Kann-Flanken-Wechsel wird durch systematische asymmetrische Verzögerungszeiten jedoch nicht beeinflusst. Bei fallenden Kann-Flanken-Wechseln treten nur stochastische Einflüsse auf, die als EMV-Jitter oder EMV-Anteil der asymmetrischen Verzögerung erkennbar sind. Dementsprechend werden bei einer Synchronisation auf eine steigende Flanke lediglich die fallenden Kann-Flanken-Wechsel und nicht die steigenden Kann-Flanken-Wechsel beeinflusst. Zur Detektion eines Flankenwechsels wird maximal n Abtasttakte vor und maximal n Abtasttakte nach der nominalen Kann-Flanken-Position abgetastet. n entspricht dabei dem Wert n der Überabtastung. Die Anzahl der Abtasttakte vor und/oder nach der nominalen Kann-Flanken-Position kann jedoch bei Vorgabe und unter Berücksichtigung entsprechender Randbedingungen sogar bis auf 1 reduziert werden. Demnach wird also ein Kann-Flanken-Wechsel mit bis zu 2n aufeinander folgenden Abtastwerten gemessen und charakterisiert.

Der Bereich in einer Folge aufeinander folgender Abtastwerte, in dem auf einen tatsächlichen Flankenwechsel geprüft wird, wird als Abtastbereich oder auch Sensitivitätsbereich bezeichnet. Der tatsächliche Flankenwechsel ist gegenüber der Kann-Flanken-Position durch asymmetrische Verzögerungszeiten und EMV-Jitter verschoben. Der Sensitivitätsbereich einer steigenden Flanke liegt bei einer 8-fachen Überabtastung in einem Intervall zwischen 6 Abtasttakten vor und 6 Abtasttakten nach der nominalen Kann-Flanken-Position. Der Sensitivitätsbereich einer fallenden Flanke liegt bei einer 8-fachen Überabtastung im Intervall zwischen 2 Abtasttakten vor und 2 Abtasttakten nach der nominalen Kann-Flanken-Position. Selbstverständlich sind die Zahlenangaben für die Anzahl der Abtasttakte vor und nach der nominalen Kann-Flanken-Position nur beispielhafte Werte. Diese können für eine andere Überabtastung oder unter Vorgabe und Berücksichtigung bestimmter Randbedingungen nahezu beliebig variiert werden. Abtastwerte außerhalb des Sensitivitätsbereichs werden nicht beachtet, können aber erfasst werden.

Als Flankenakzeptanz-Vektor wird eine geordnete Kombination der 2n Abtastwerte eines Kann-Flanken-Wechsels bezeichnet. Für eine bestimmte Flankenart (steigend oder fallend) existieren mehrere Flanken-Akzeptanz-Vektoren. Das zum letzten Bit inverse Bit (wenn eine steigende Flanke erwartet wird, ist das aktuelle Bit Null und das dazu inverse Bit wäre eins) muss mindestens einmal in jedem der Flanken-Akzeptanz-Vektoren enthalten sein. Aus diesem Grund ist für steigende Flanken ein Vektor mit nur Nullen nicht zugelassen. Die Anzahl erforderlicher Flanken-Akzeptanz-Vektoren richtet sich nach der maximal tolerablen asymmetrischen Verzögerung der gesamten Wirkkette sowie dem Grad der Überabtastung.

Aus der Menge der ermittelten Flanken-Akzeptanz-Vektoren wird für die Erkennung einer steigenden Flanke eine Untermenge ausgewählt, die in eindeutiger Weise die Erkennung und Zuordnung einer steigenden Flanke zu ihrer Kann-Flanken-Position ermöglicht. Vorteilhaft wird durch Ausmessen der Verzögerung eines oder mehrerer zwingend im Protokoll vorgesehener oder zufällig auftretender Wechsel von steigender und fallender Flanke die Tendenz der asymmetrischen Verzögerung (mit Unsicherheit des EMV-Einflusses) bestimmt. Die zur Bewertung verwendeten Flanken-Akzeptanz-Vektoren werden so gewählt, dass sie einen Flankenwechsel um die ermittelte Tendenzposition herum erwarten. Die gewählte Untermenge muss insbesondere bei der Dekodierung aufeinander folgender Nullen gewährleisten, dass keine Mehrdeutigkeit der Flankenerkennung möglich ist. Eine Mehrdeutigkeit wäre der Fall, wenn eine erkannte steigende Flanke sowohl von der Kann-Flanken-Position (i) nach spät als auch von der Kann-Flanken-Position (i+1) nach früh verschoben sein könnte und zwei Flanken-Akzeptanz-Vektoren (einer zum Bewertungszeitpunkt BEW (i) und einer zum BEW (i+1)) zutreffen würden.

Durch das Ausmessen der Verzögerung mindestens eines zwingend im Protokoll vorgesehenen Wechsels von steigender und fallender Flanke ergibt sich ein erwarteter Flankenwechsel an einer bestimmten Position vor oder nach der Kann-Flanken-Position innerhalb der Abtastperioden. Dann wird eine Untermenge der Flanken-Akzeptanz-Vektoren als Flanken-Akzeptanz-Vektorsatz ausgewählt. Die Untermenge umfasst zum Einen den Flanken-Akzeptanz-Vektor, mit dem ein Flankenwechsel an der erwarteten Flankenwechselposition detektiert werden kann. Zudem umfasst die Untermenge eine bestimmte Anzahl von Flanken-Akzeptanz-Vektoren vor diesem ersten Vektor und nach dem ersten Vektor. Die Anzahl der zusätzlichen Flanken-Akzeptanz-Vektoren vor und nach diesem Vektor hängt ab von der Größe des EMV-Anteils an der asymmetrischen Verzögerung. Falls man beispielsweise davon ausgehen kann, dass der EMV-Einfluss auf die Verzögerung kleiner als zwei Abtasttakte ist, genügen zwei zusätzliche Flanken-Akzeptanz-Vektoren vor und nach dem ersten Vektor. In diesem Fall würde der Flanken-Akzeptanz-Vektorsatz aus fünf Flankenakzeptanz-Vektoren bestehen.

Für erwartete fallende Flanken ergibt sich in entsprechender Weise ein Flanken-Akzeptanz-Vektorsatz, wobei der Sensitivitätsbereich und damit die Anzahl der zu berücksichtigenden Abtastwerte innerhalb der Flanken-Akzeptanz-Vektoren geringer ist als bei erwarteter steigender Flanke.

Bei dem Verfahren werden zuerst ankommende Bits zuerst abgetastet. Vor der Abtastung eines Bits wird aufgrund des erkannten Wertes des zuvor abgetasteten Bits die mögliche folgende Flanke festgelegt und aufgrund dieser Festlegung der zutreffende Flanken-Akzeptanz-Vektorsatz bestimmt. Falls das letzte Bit eine eins war, wird der entsprechende Flanken-Akzeptanz-Vektorsatz für fallende Flanken gewählt. Falls das letzte Bit eine Null war, wird der entsprechende Flanken-Akzeptanz-Vektorsatz für erwartete steigende Flanken gewählt.

Immer wenn die bei einer n-fachen Überabtastung vorliegenden 2n Abtastwerte erfasst wurden, erfolgt zu den Bewertungszeitpunkten BEW die Bewertung der erfassten Abtastwerte und damit die Ermittlung des entsprechenden Bit-Wertes. Wie oben bereits ausgeführt, kann das Erfassen der Abtastwerte und die Bewertung auch auf die Abtastwerte des Sensitivitätsbereiches beschränkt werden. Denkbar wäre auch, schon bei Erreichen der Grenze des Sensitivitätsbereiches mit der Bewertung zu beginnen, da die Abtastwerte außerhalb des Sensitivitätsbereiches für die Auswertung nicht relevant sind.

Ergibt sich bei der Bewertung, dass im Speicher der Abtastwerte mindestens ein Vektor vorliegt, der der Menge des gewählten Flanken-Akzeptanz-Vektorsatzes angehört, gilt die zugehörige Flanke als erkannt und der zugehörige Bitwert ist bestimmt. Anderenfalls ist keine Flanke erkannt worden und es wird davon ausgegangen, dass das aktuelle Bit das gleiche wie das Vorgänger-Bit ist.

Zur Realisierung des erfindungsgemäßen Verfahrens sind in den Teilnehmern des Datenübertragungssystems, zumindest aber in den empfangenden Teilnehmern, vorteilhafterweise zwei Speicher vorgesehen, die abwechselnd beschrieben werden können. Denkbar ist beispielsweise der Einsatz von 16 Bit-Speichern, die von zwei Zählern im Wertebereich bis 16 angesteuert werden, wobei die Zähler bei jedem Abtasttakt inkrementiert werden.

Zur Realisierung des Verfahrens können eine oder mehrere der nachfolgenden Randbedingungen vorgegeben werden:

Die Filterwirkung einer Majority-Voting-Machine muss berücksichtigt werden. Bei der Bestimmung des maximal zulässigen Zeitbudgets für die asymmetrischen Verzögerungszeiten muss der Zeitdiskretisierungsfehler der Abtastung berücksichtigt werden. Insbesondere dient der Flanken-Akzeptanz-Vektor, der neben den "don't cares" = "X" ausschließlich Nullen bzw. Einsen enthält, zur Erhöhung der Robustheit des Verfahrens.

Flankenwechsel und die Position der erkannten Wechsel im Bezug auf den Zählerstand können gemäß der vorliegenden Erfindung auch ohne den Einsatz von Vektoren detektiert und ermittelt werden. Durch die Ermittlung der Position eines Flankenwechsels ist eine zuverlässige und sichere Bewertung des aktuellen Bit-Wertes möglich. Die Sensitivitätsbereiche können von den angegebenen Beispielen abweichen. Statt der hier erwähnten achtfachen Überabtastung kann auch eine beliebig andere n-fache Überabtastung gewählt werden. Statt einer Synchronisation auf die fallende Flanke kann auch eine Synchronisation auf eine steigende Flanke ausgeführt werden. Die Anzahl der abzutastenden Bits nach der Synchronisationsflanke variiert. Die Bewertung der abgetasteten Werte ermöglicht die Diagnose unplausibler Kombinationen als Eingangsbitfehler (zum Beispiel oszillierende Eingangsbitströme). Der Bewertungszeitpunkt BEW muss nicht zwangsläufig nach 2n beobachteten Abtastwerten stattfinden, sondern kann auch bereits nach erfolgter Beobachtung aller Abtastwerte des Sensitivitätsbereichs noch bevor alle 2n Abtastwerte beobachtet wurden erfolgen (z.B. nach i Abtastwerten, mit i = 1... (2n-1)), da die Abtastwerte außerhalb des Sensitivitätsbereiches für die Bewertung irrelevant sind. Das Majority-Voting fordert eine Mindestdauer der Eins- bzw. Null-Phase von drei Abtasttaktdauern. Alternativ könnte das Majority-Voting auch auf zwei konsekutive Flanken (steigend und fallend) des Abtasttaktes reduziert werden oder eine Filterung durch geeignete Wahl von Flanken-Akzeptanz-Vektoren erreicht werden.

### Zeichnungen

Weitere Vorteile und vorteilhafte Ausgestaltungen der Erfindung ergeben sich aus der nachfolgenden Figurenbeschreibung und den dazugehörigen Figuren. Es zeigen:
Figur 1 Übergangsdiagramm von in einem erfindungsgemäßen Datenübertragungssystem empfangenen Bits;
Figur 2 Sensitivitätsbereiche für erwartete steigende und fallende Flanken;
Figur 3a ein erstes Beispiel für die Ausgestaltung von Flanken-Akzeptanz-Vektoren für steigende Flanken;
Figur 3b ein zweites Beispiel für die Ausgestaltung von Flanken-Akzeptanz-Vektoren für steigende Flanken;
Figur 4a eine Untermenge der Flanken-Akzeptanz-Vektoren aus Figur 3a;
Figur 4b Untermengen der Flanken-Akzeptanz-Vektoren aus Figur 3b;
Figur 5a ein erstes Beispiel für die Ausgestaltung von Flanken-Akzeptanz-Vektoren für fallende Flanken;
Figur 5b ein zweites Beispiel für die Ausgestaltung von Flanken-Akzeptanz-Vektoren für fallende Flanken;
Figur 6 ein erstes Beispiel für die Realisierung des erfindungsgemäßen Verfahrens für eine erste beispielhafte Bitfolge;
Figur 7 ein zweites Beispiel für die Realisierung des erfindungsgemäßen Verfahrens für eine zweite beispielhafte Bitfolge;
Figur 8 ein drittes Beispiel für die Realisierung des erfindungsgemäßen Verfahrens für eine dritte beispielhafte Bitfolge;
Figur 9 ein viertes Beispiel für die Realisierung des erfindungsgemäßen Verfahrens für eine vierte beispielhafte Bitfolge;
Figur 10 ein fünftes Beispiel für die Realisierung dies erfindungsgemäßen Verfahrens für eine fünfte beispielhafte Bitfolge;
Figur 11 ein erstes Beispiel für die Realisierung des erfindungsgemäßen Verfahrens zur Messung der Verzögerung von steigender und fallender Flanke;
Figur 12 ein zweites Beispiel für die Realisierung des erfindungsgemäßen Verfahrens zur Messung der Verzögerung von steigender und fallender Flanke;
Figur 13 Ablaufdiagramm eines erfindungsgemäßen Verfahrens gemäß einer bevorzugten Ausführungsform;
Figur 14a ein Signalverlauf bei fallender bzw. steigender Flanke in einem Datenübertragungssystem;
Figur 14b Verläufe eines von einem sendenden Teilnehmer ausgesandten und eines von einem empfangenden Teilnehmer empfangenen Signals;
Figur 15 aus dem Stand der Technik bekanntes funktionierendes Verfahren zum Dekodieren eines Signals beim 5. Abtastpunkt;
Figur 16 aus dem Stand der Technik bekanntes Verfahren zum Dekodieren eines Signals beim 5. Abtastpunkt mit Dekodierungsfehler;
Figur 17 ein Beispiel für eine Signalkette eines Datenübertragungssystems mit entsprechenden Beispielwerten für die resultierende asymmetrische Verzögerung ohne den EMV-Anteil.

### Beschreibung der Ausführungsbeispiele

Die Vernetzung von Steuergeräten, Sensorik und Aktuatorik mit Hilfe eines Kommunikationssystems und einer Kommunikationsverbindung bspw. in Form eines Bussystems hat in den letzten Jahren beim Bau von modernen Kraftfahrzeugen oder auch im Maschinenbau, insbesondere im Werkzeugmaschinenbereich, als auch in der Automatisierung drastisch zugenommen. Synergieeffekte durch Verteilung von Funktionen auf mehrere Steuergeräte können dabei erzielt werden. Man spricht hierbei von verteilten Systemen.

Die Kommunikation zwischen verschiedenen Teilnehmern eines solchen Datenübertragungssystems findet mehr und mehr über ein Bussystem statt. Der Kommunikationsverkehr auf dem Bussystem, Zugriffs- und Empfangsmechanismen, sowie Fehlerbehandlung werden über ein Protokoll geregelt. Ein bekanntes Protokoll ist beispielsweise das FlexRay-Protokoll, wobei derzeit die FlexRay-Protokollspezifikation v2.1 zu Grunde liegt. Bei FlexRay handelt es sich um ein schnelles, deterministisches und fehlertolerantes Bussystem, insbesondere für den Einsatz in Kraftfahrzeugen. Das FlexRay-Protokoll arbeitet nach dem Prinzip des Time Division Multiple Access (TDMA), wobei den Teilnehmern bzw. den zu übertragenden Botschaften feste Zeitschlitze zugewiesen werden, in denen sie einen exklusiven Zugriff auf die Kommunikationsverbindung haben. Die Zeitschlitze wiederholen sich dabei in einem festgelegten Zyklus, so dass der Zeitpunkt, zu dem eine Botschaft über den Bus übertragen wird, exakt vorausgesagt werden kann und der Buszugriff deterministisch erfolgt. FlexRay kommuniziert über eine oder zwei physikalisch getrennte Leitungen mit einer Datenrate von jeweils maximal 10 Mbit/sec. Selbstverständlich kann FlexRay aber auch mit niedrigeren Datenraten betrieben werden. Die beiden Kanäle entsprechen dabei der physikalischen Schicht, insbesondere des sogenannten OSI (Open System Interconnection) Schichtenmodells. Diese dienen hauptsächlich der redundanten und damit fehlertoleranten Übertragung von Botschaften, können jedoch auch unterschiedliche Botschaften übertragen, wodurch sich dann die Datenrate verdoppeln würde. Es ist ebenfalls denkbar, dass sich das übertragene Signal aus der Differenz der beiden über die Leitungen übertragenen Signale als ein Differenzsignal ergibt. Die Signalübertragung über die physikalische Schicht kann elektrisch, optisch oder auf eine beliebig andere Art erfolgen.

Um synchrone Funktionen zu realisieren und die Bandbreite durch kleine Abstände zwischen zwei Botschaften zu optimieren, benötigen die Teilnehmer in dem Kommunikationsnetzwerk eine gemeinsame Zeitbasis, die sogenannte globale Zeit. Für die Uhrensynchronisation werden Synchronisationsnachrichten im statischen Teil des Zyklus übertragen, wobei mit Hilfe eines speziellen Algorithmus entsprechend der FlexRay-Spezifikation die lokale Uhrzeit eines Teilnehmers so korrigiert wird, dass alle lokalen Uhren zu einer globalen Uhr synchron laufen.

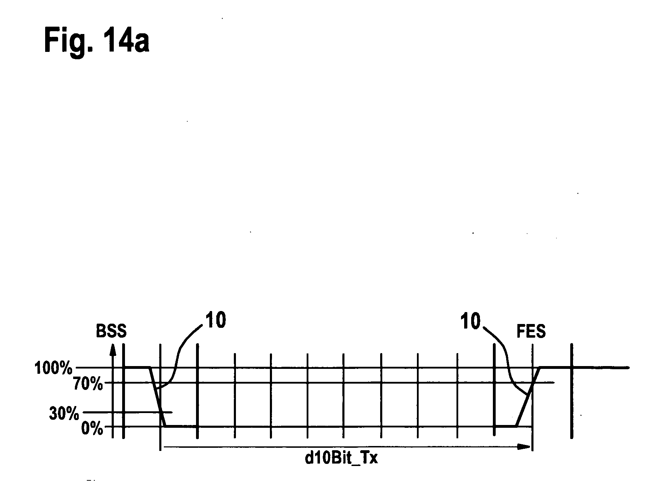

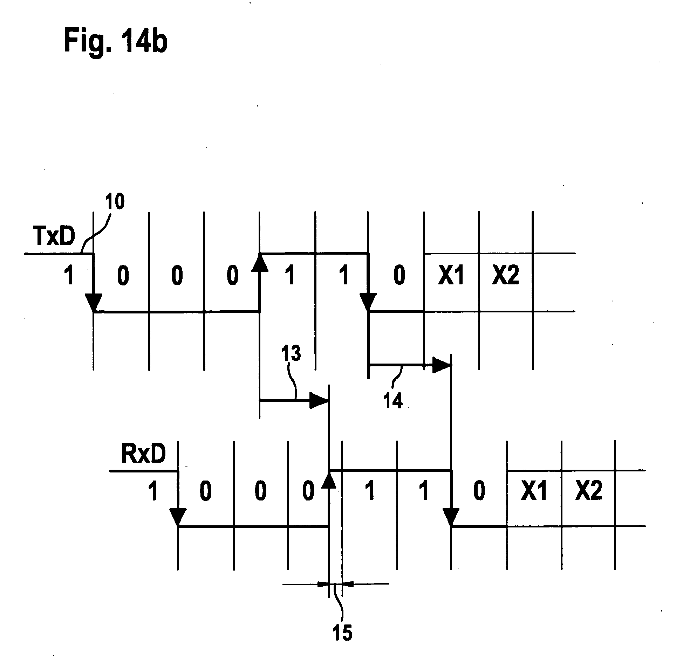

In Figur 14a ist gezeigt, dass Signale im Bereich von Flankenwechseln von High nach Low oder von Low nach High keinen idealen rechteckigen Verlauf, sondern einen schrägen, rampenförmigen Verlauf aufweisen. Es ist zu erkennen, dass die Steigung der fallenden Flanke und der steigenden Flanke unterschiedlich stark ist. Dieser Unterschied führt dazu, dass die resultierenden Verzögerungen für steigende und fallende Flanken unterschiedlich sind (vgl. Figur 14b). Abhängig von der Differenz der Verzögerungen für steigende Flanken 13 und fallende Flanken 14 ergibt sich eine asymmetrische Verzögerung 15. In Figur 14b ist oben der Verlauf des ausgesandten Signals 10 und unten der Verlauf des empfangenen Signals 10 dargestellt. Die Verzögerungen 13, 14 betreffen die Differenz der entsprechenden Flanken zwischen dem ausgesandten Signal TxD und dem empfangenen Signal RxD.

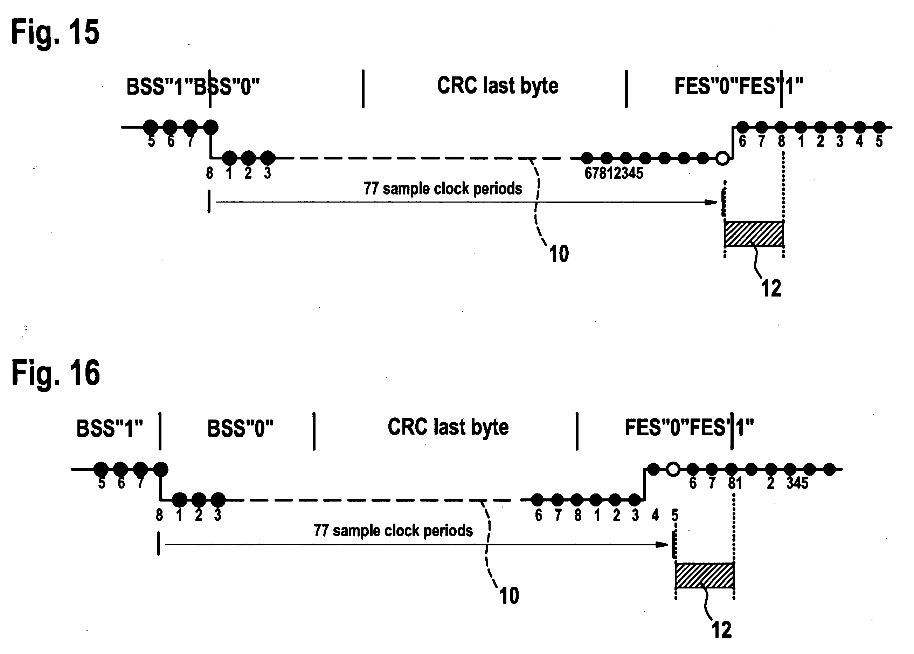

Bei der Übertragung von Daten oder Botschaften über ein Bussystem mit solchen Verzögerungen, werden Impulse verzerrt, weil High-to-Low- bzw. Low-to-High-Flanken auf dem Übertragungsweg unterschiedlich stark verzögert werden. Wird beim Stand der Technik der gesendete Impuls im Empfänger mit dem dort vorliegenden Abtasttakt (der sogenannten Sampling Rate) mehrfach (zum Beispiel 8-mal pro Bit) abgetastet, so entscheidet die Lage des Abtastpunktes, d.h. die Auswahl genau eines dieser 8 Abtastwerte, ob das Datum richtig oder falsch abgetastet wird. Dies wird nachfolgend anhand der Figuren 15 und 16 näher erläutert.

Ein zu dekodierendes Signal ist mit dem Bezugszeichen 10 bezeichnet. Die Dekodierung ist auf die fallende BSS (Byte Start Sequence)-Flanke synchronisiert. Zum Zeitpunkt der Synchronisation beginnt ein Abtastzähler zu laufen und wird immer beim Erreichen des Zählerstands 8 rückgesetzt. In den Beispielen aus den Figuren 15 und 16 wird das Signal jeweils beim 5. Abtastpunkt abgetastet. Die starre Festlegung des Abtastzeitpunktes ohne Berücksichtigung der asymmetrischen Verzögerungen auf den unterschiedlichen Übertragungswegen führt zu Problemen.

Durch die starre Wahl des Abtastzeitpunktes pro Bit (zum Beispiel bei 8 Abtastwerten pro Bit auf den 5. Abtastwert, in der Mitte eines Bits) ist sowohl der Einfluss der asymmetrischen Verzögerung als auch die Frequenzabweichung und die zusätzliche Zeitdiskretisierung durch die Abtastung ein Problem und stellt hohe Anforderungen an den Übertragungskanal. Eine Erhöhung der Flankensteilheit zur Verringerung der asymmetrischen Verzögerungen brächte zwar Vorteile für das Timing, würde aber andererseits technisch anspruchsvollere und damit teurere Komponenten voraussetzen und zudem das EMV-Verhalten des Datenübertragungssystems ungünstig beeinflussen. Aber je nach Impulsverzerrung läuft man Gefahr, entweder an der einen oder der anderen Bitgrenze das falsche Datum auszuwerten. Dies zeigt sich in den Figuren 15 und 16.

Der anstehende Flankenwechsel müsste idealerweise eigentlich genau zum Zählerstand 8 zwischen FES "0" und FES "1" erfolgen. Aufgrund der asymmetrischen Verzögerungen wird er in Figur 15 jedoch so weit in Richtung früh verschoben, dass der Flankenwechsel genau zwischen dem 5. und dem 6. Abtastwert erfolgt. Das ist in diesem Beispiel insofern unkritisch als der Abtastzeitpunkt noch vor dem Flankenwechsel liegt und das dem Flankenwechsel vorgehende Bit (0) korrekt dekodiert werden kann.

In Figur 16 ist der Flankenwechsel aufgrund größerer asymmetrischer Verzögerungen noch weiter in Richtung früh verschoben, so dass er nun vor dem Abtastzeitpunkt zwischen dem 3. und dem 4. Abtastwert liegt. Es° kann nun nicht mehr der richtige Bitwert (0) erfasst werden. Stattdessen wird zum Abtastzeitpunkt beim 5. Abtastwert ein falscher Bitwert (1) erfasst; es kommt zu einem Dekodierungsfehler.

Bei der Realisierung von FlexRay-Datenübertragungssystemen, insbesondere bei Systemen mit relativ komplexen Topologien umfassend mehrere Sternkoppler und passive Netzwerke, hat sich gezeigt, dass die dort auftretenden asymmetrischen Verzögerungszeiten so groß sind, dass sie ein durch das FlexRay-Protokoll vorgegebenes Zeitbudget übersteigen. Gemäß FlexRay-Protokoll wird mit fallender BSS (Byte Start Sequence)-Flanke der Abtastzähler synchronisiert, d.h. zurückgesetzt. Bei einem Zählerstand von 5 wird abgetastet. Bei einer 8-fachen Überabtastung (sogenanntes Oversampling), wie sie derzeit in FlexRay vorgesehen ist, verbleiben zwischen dem Abtastzeitpunkt (5. Abtastwert) und dem 8. Abtastwert also noch 3 Abtasttakte die bei einem Kommunikationscontroller-Takt von 80 MHz jeweils 12,5 ns, in der Summe also einem Zeitbudget 12 von 37,5 ns entsprechen. Dieses Zeitbudget 12 dient eigentlich zum Ausgleich von asymmetrischen Verzögerungen aufgrund der Differenz von fallender zu steigender Flankensteilheit. Falls jedoch - wie dies bei komplexen Netztopologien der Fall sein kann - die asymmetrische Verzögerung das vorgesehene Zeitbudget 12 übersteigt (vgl. Figur 16), führt dies dazu, dass bei einer Abtastung beim 5. Abtasttakt (Zählerstand des Abtastzählers auf 5) ein falscher Wert ermittelt wird.

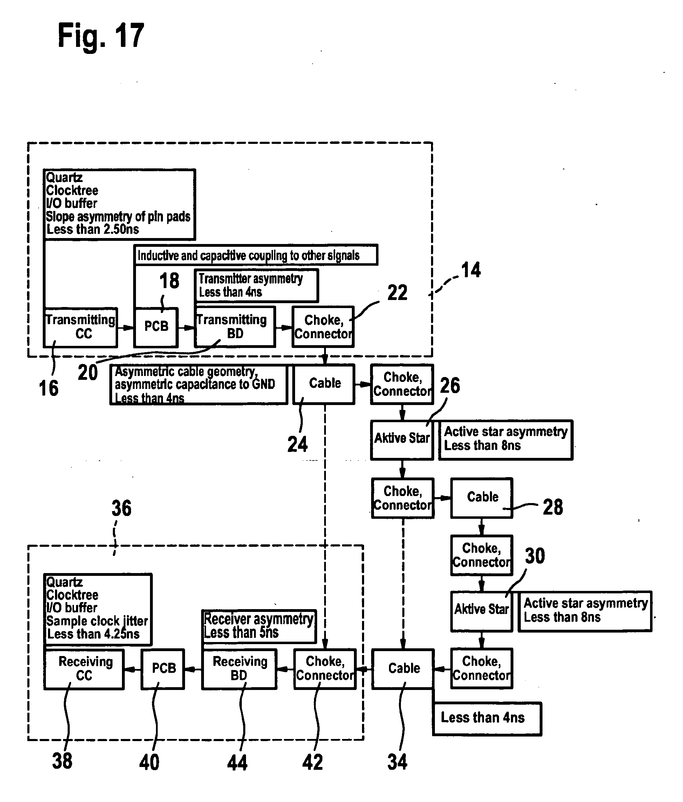

Ein Datenübertragungspfad in einer etwas komplexeren Netztopologie ist mit den entsprechenden resultierenden Verzögerungszeiten für die asymmetrische Verzögerung beispielhaft in Figur 17 dargestellt. Der Datenübertragungspfad umfasst einen sendenden Teilnehmer 14 mit einem Kommunikationscontroller (Communication Controller, CC) 16, einer bedruckten Leiterplatte mit Leiterbahnen und Bauteilen (Printed Circuit Board, PCB) 18 und einem Sender (Transmitter). Der Sender umfasst einen Bustreiber (Busdriver, BD) 20 und ein Abschlusselement (CMC, Common Mode Choke; Termination) 22. Der sendende Teilnehmer 14 ist über ein erstes passives Netzwerk 24, das im wesentlichen Verbindungsleitungen umfasst, an einem ersten aktiven Sternknoten 26 angeschlossen, der unter anderem zwei Bustreiber umfasst.

Der erste Sternknoten 26 steht über weitere Verbindungsleitungen 28 mit einem zweiten aktiven Sternknoten 30 in Verbindung, der ebenfalls zwei Bustreiber umfasst. Der Sternknoten 30 steht über ein zweites passives Netzwerk 34 mit einem empfangenden Teilnehmer 36 in Verbindung, mit einem Kommunikationscontroller (Communication Controller, CC) 38, einer bedruckten Leiterplatte (PCB) 40 und einem Empfänger (Receiver). Der empfänger umfasst ein Abschlusselement (CMC; Termination) 42 und einen Bustreiber (Busdriver, BD) 44.

Die entsprechenden geschätzten, modellierten und/oder berechneten Zeitangaben für die asymmetrische Verzögerung (ohne den EMV-Anteil) sind für die verschiedenen Komponenten angegeben und müssen aufsummiert werden, um die gesamte asymmetrische Verzögerung zu ermitteln. Mit für umfangreiche Netzwerktopologien angenommenen Zahlenwerten ergibt sich eine asymmetrische Verzögerung von etwa 72 ns. Das liegt oberhalb des zuvor ermittelten Zeitbudgets von ca. 37,5 ns. Somit kann das aus dem Stand der Technik bekannte Dekodierungsverfahren zu bestimmten Zeitpunkten bei der Netzwerktopologie aus Figur 17 unter Beibehaltung der gewünschten hohen Datenrate von etwa 10 Mbit/sec. nicht mehr ordnungsgemäß funktionieren.

Zusammenfassend kann gesagt werden, dass durch das FlexRay-Protokoll Vorgaben gemacht werden, die der Physical Layer - zumindest bei komplexen Netztopologien - nicht halten kann. Hier kann die vorliegende Erfindung Abhilfe schaffen.

Erfindungsgemäß wird ein Dekodierungsverfahren vorgeschlagen, bei dem ein Signal nicht zu einem bestimmten Zeitpunkt (z.B. wenn der Abtastzähler auf 5 steht) abgetastet wird. Es wird in einem ersten Schritt eine Abschätzung getroffen, wo sich eine mögliche Flankenposition des zu dekodierenden Signals befinden könnte. Im Rahmen der Abschätzung wird durch einen Zähler der Abstand mindestens einer zwingend im Protokoll vorgeschriebenen oder zufälligen Folge von steigenden und fallenden Flanken vermessen und daraus der systematische Anteil der asymmetrischen Verzögerung ermittelt. Dann wird ausreichend weit vor und ausreichend weit nach der möglichen Flankenposition abgetastet. Die abgetasteten Werte werden mit zuvor aufgenommenen Abtastwerten verglichen und anhand des Vergleichs der entsprechende Bitwert ermittelt. Jeweils ein Satz mehrerer Abtastwerte wurde für eine Position eines Flankenwechsels aufgenommen und abgespeichert. Wenn also die abgetasteten Werte mit einem bestimmten abgespeicherten Satz von Abtastwerten übereinstimmen, wird davon ausgegangen, dass der Flankenwechsel an der dem Abtastwertesatz entsprechenden Position aufgetreten ist. Mit dem erfindungsgemäßen Verfahren können die Eigenschaften des Übertragungskanals berücksichtigt werden. Es ist besonders robust gegenüber asymmetrischen Verzögerungen.

Das erfindungsgemäße Verfahren wird nachfolgend anhand des FlexRay-Protokolls näher erläutert. Selbstverständlich kann das Verfahren jedoch auch für beliebig andere Protokolle eingesetzt werden.

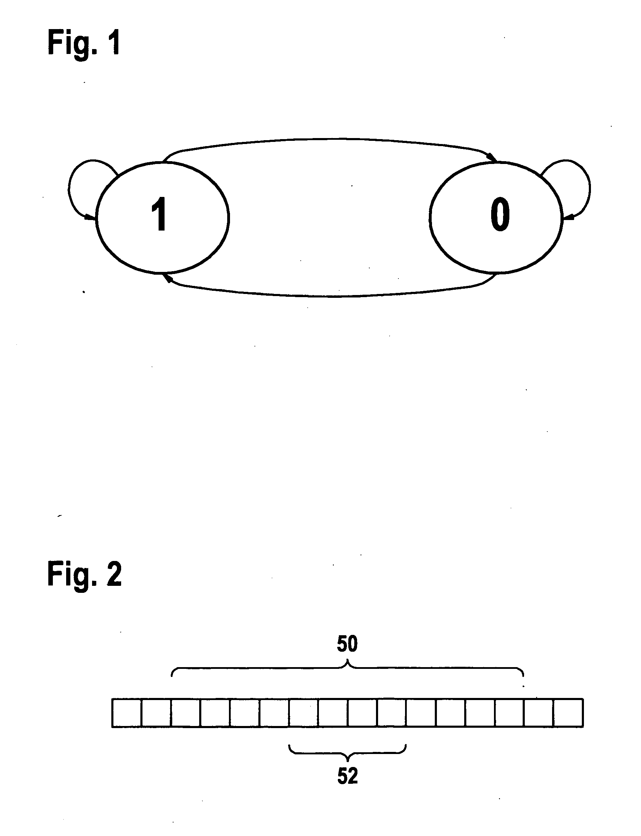

Bei dem erfindungsgemäßen Verfahren werden zunächst anhand des in Figur 1 dargestellten Übergangsdiagramms ausgehend von einem bestimmten Zustand empfangener Bits die verschiedenen möglichen nachfolgenden Zustände festgelegt. Nach einer 0 muss eine 0 oder eine 1 folgen. Nach einer 1 folgt eine 1 oder eine 0. Eine steigende Flanke kann nur nach einer 0 folgen. Eine fallende Flanke kann nur nach einer 1 folgen. Es ist unmöglich, dass eine steigende Flanke auf eine 1 folgt oder dass eine fallende Flanke auf eine 0 folgt.

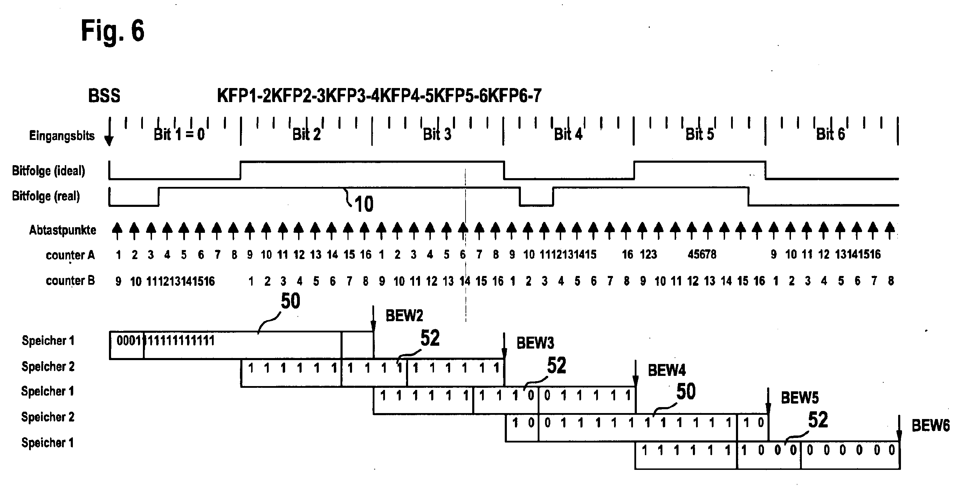

Das Dekodierungsverfahren wird nachfolgend anhand Figur 6 näher erläutert. Gemäß FlexRay-Protokoll-Spezifikation 2.1 erfolgt die Synchronisation auf die fallende BSS-Flanke. Selbstverständlich kann jedoch auch auf steigende Flanken synchronisiert werden. Bei der Synchronisation auf die fallende BSS-Flanke wird ein erster Zähler A (Counter A) auf 1 und ein zweiter Zähler B (Counter B) auf 9 gesetzt. Selbstverständlich kann das Verfahren jedoch auch mit lediglich einem Zähler realisiert werden. Eigentlich wird bei der Verwendung eines Majority-Votings der Zähler A auf 2 und der Zähler B auf 10 gesetzt, da eine Periode in der Signalverarbeitung untergeht, aber makroskopisch von außen betrachtet gilt die Initialisierung der Zähler A, B auf 1 bzw. 9.

Das in der FlexRay-Protokoll-Spezifikation 2.1 verwendete 8-fach Oversampling (Überabtastung) wird beibehalten. Selbstverständlich funktioniert das Verfahren aber auch mit jeder anderen Art von Überabtastung gut. Bei n-facher Überabtastung (n#8) sind entsprechende Anpassungen erforderlich.

Mit der Periodizität von 8 Abtastperioden kann ein Flankenwechsel stattfinden, muss aber nicht (vgl. Figur 1 und dazugehörige Beschreibung). Zunächst wird die Position eines potenziellen Flankenwechsels ohne stochastischen oder systematischen Einfluss eines Jitters oder einer anderen asymmetrischen Verzögerung ermittelt. Diese Position wird als Kann-Flanken-Position (KFP) bezeichnet. Bei der idealen Bitfolge in Figur 6 erfolgen die Flankenwechsel immer genau zu den KFPs, insbesondere KFP1-2, KFP3-4, KFP4-5 und KFP5-6. Durch asymmetrische Verzögerungszeiten wird als Folge der Synchronisation auf die fallende (und nicht auf die steigende) BSS-Flanke die nominale Position der steigenden Kann-Flankenwechsel beeinflusst. Dementsprechend sind in Figur 6 bei der realen Bitfolge die steigenden Flankenwechsel relativ zu den KFPs nach früh oder spät verschoben. Die fallenden Flankenwechsel sind dagegen deutlich geringer verschoben, da sich bei ihnen nur der EMV-Anteil der asymmetrischen Verzögerung auswirkt. Bis auf "stochastische Einflüsse, als EMV-Jitter erkennbar, haben die asymmetrischen Verzögerungszeiten also nur einen geringen Einfluss auf die tatsächliche Position der fallenden Kann-Flankenwechsel.

Bei einer 8-fach Überabtastung wird ein Kann-Flankenwechsel maximal 8 Abtasttakte vor und maximal 8 Abtasttakte nach der nominalen Position abgetastet. Dies wird als eine Folge von Abtastwerten bezeichnet. Selbstverständlich kann die Abtastung auch weniger als 8 Abtasttakte vor und/oder nach der nominalen Position eines Kann-Flankenwechsels umfassen.

Ein Bereich in einer Folge aufeinander folgender Abtastwerte, in dem auf einen tatsächlichen Flankenwechsel (verschoben von der nominalen Position durch asymmetrische Verzögerungszeiten und EMV-Jitter) geprüft wird, wird als Sensitivitätsbereich bezeichnet. Dieser ist in Figur 2 der vorliegenden Patentanmeldung dargestellt. Der Sensitivitätsbereich 50 für eine steigende Flanke liegt in einem Intervall zwischen 6 Abtasttakten vor und 6 Abtasttakten nach der nominalen KFP. Der Sensitivitätsbereich 52 einer fallenden Flanke liegt im Intervall zwischen 2 Abtasttakten vor und 2 Abtasttakten nach der nominalen KFP. Selbstverständlich kann sowohl der Sensitivitätsbereich 50, 52 für eine steigende Flanke als auch der für eine fallende Flanke - insbesondere bei einer anderen als der 8-fachen Überabtastung - auch ein Intervall mit mehr oder weniger Abtasttakten als angegeben vor und/oder nach der nominellen KFP umfassen. Abtastwerte außerhalb des Sensitivitätsbereichs 50, 52 werden nicht beachtet.

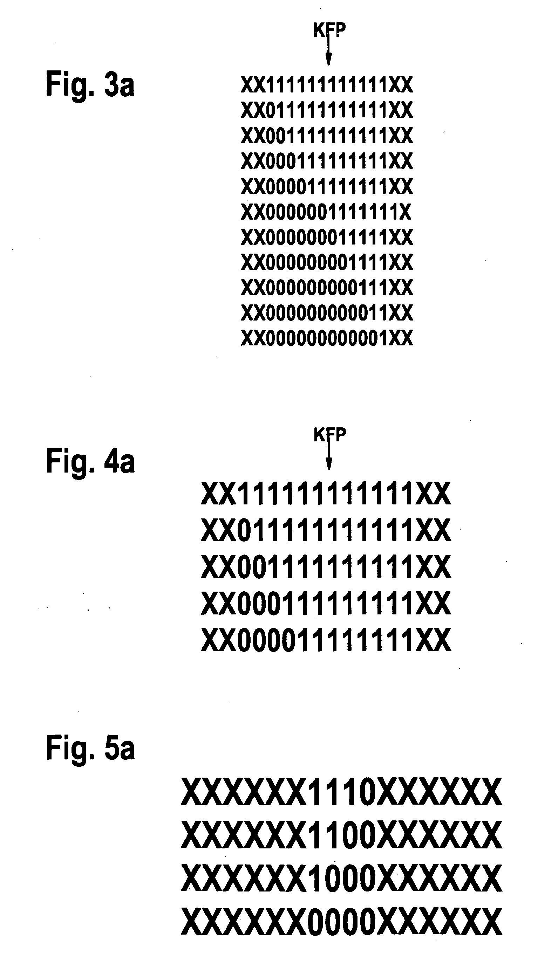

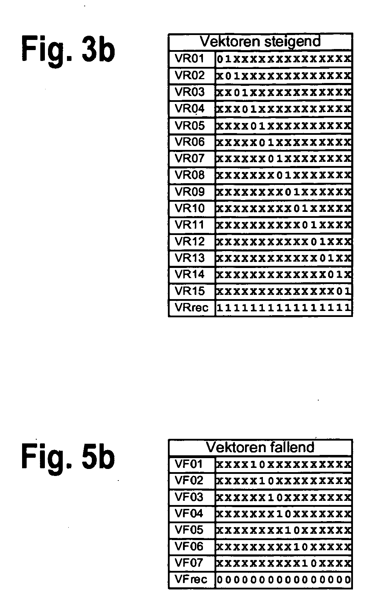

Als Flanken-Akzeptanz-Vektor (FAV) wird eine geordnete Kombination von 16 Abtastwerten eines Kann-Flanken-Wechsels bezeichnet. Für eine Flankenart (steigend oder fallend) existieren mehrere FAVs: In den Figuren 3a und 3b sind für steigende Flanken verschiedene FAVs untereinander beispielhaft dargestellt, wobei links zeitlich zuerst ist. Das zum vorangegangenen Bit ('0') inverse Bit ('1') muss mindestens einmal in einem FAV enthalten sein. Deshalb ist ein FAV ausschließlich bestehend aus Nullen nicht zugelassen. Die 'X' am Anfang und am Ende der FAVs ergeben sich aus der Tatsache, dass Abtastwerte außerhalb des Sensitivitätsbereichs nicht von Bedeutung sind für die Auswertung.

Um die Anzahl der mit den aufgenommenen Abtastwerten zu vergleichenden FAVs zu reduzieren und damit Resourcen rund Zeit für die Auswertung einzusparen, wird aus den in den Figuren 3a bzw. 3b dargestellten FAVs für die Erkennung einer steigenden Flanke eine Untermenge ausgewählt, die in eindeutiger Weise die Erkennung und Zuordnung einer steigenden Flanke zu ihrer KFP ermöglicht. Vorteilhaft wird durch Ausmessen der Verzögerung eines oder mehrerer zwingend im Protokoll vorgesehener oder zufällig auftretender Wechsel von steigender und fallender Flanke die Tendenz der systematischen Anteile der asymmetrischen Verzögerung (mit Unsicherheit des EMV-Einflusses) bestimmt. Die zur Bewertung verwendeten FAVs werden so gewählt, dass sie einen Flankenwechsel um die ermittelte Tendenzposition herum erwarten. Die gewählte Untermenge muss insbesondere bei der Dekodierung aufeinander folgender Nullen gewährleisten, dass keine Mehrdeutigkeit der Flankenerkennung möglich ist. Eine Mehrdeutigkeit wäre der Fall, wenn eine erkannte steigende Flanke sowohl von der KFP(i) nach spät als auch von der KFP(i+1) nach früh verschoben sein könnte und zwei FAVs (einer bei BEW(i) und einer bei BEW(i+1)) zutreffen würden. Als zwingend im Protokoll vorgesehener Wechsel zwischen steigender und fallender Flanke kann beispielsweise die Differenz zwischen FSS (Frame Start Sequence) und BSS herangezogen werden.

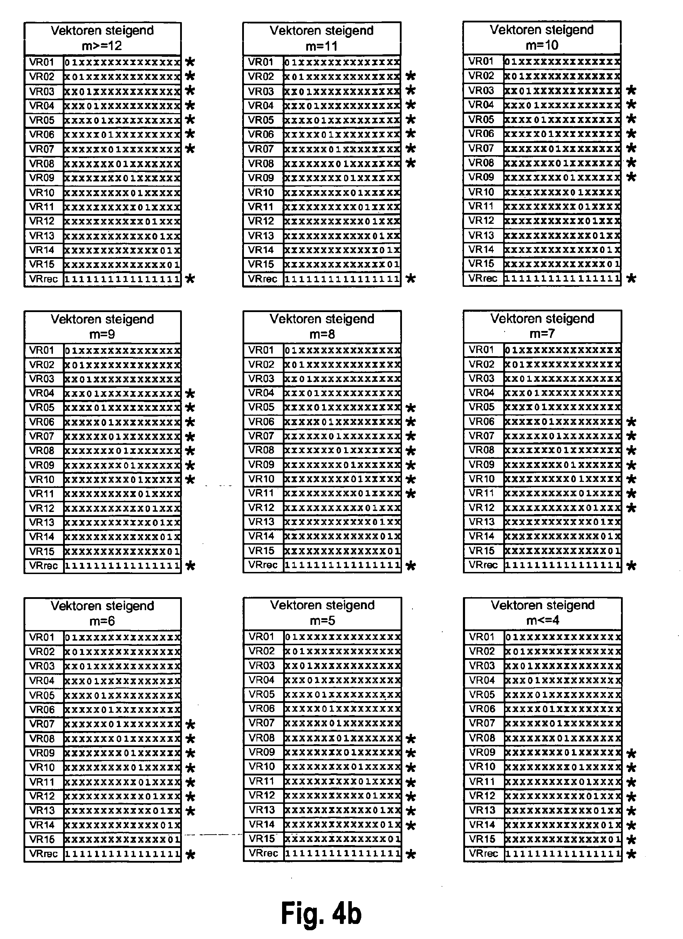

In den Figuren 4a und 4b sind solche Untermengen der FAVs aus den Figuren 3a und 3b beispielhaft dargestellt. Angenommen, das Ausmessen ergibt einen erwarteten Flankenwechsel an Sampling-Perioden-Position 4 vor KFP. Ein Flankenwechsel von '0' auf '1' an der Position 4 vor KFP wird von dem dritten FAV aus der Menge an FAVs in Figur 3a erkannt. Dieser FAV ist somit auf jeden Fall Teil der ausgewählten Untermenge. Um nun eine Detektion des Flankenwechsels um die ermittelte Tendenz herum mit ausreichender Sicherheit und Zuverlässigkeit zu ermöglichen, wird ausgehend von dem dritten FAV aus Figur 3a eine bestimmte Anzahl an FAVs vor dem dritten FAV und eine bestimmte Anzahl an FAVs nach dem dritten FAV in die Untermenge aufgenommen. Bei dem in Figur 4a dargestellten Ausführungsbeispiel wurden ausgehend von dem dritten FAV zwei FAVs vor und zwei FAVs nach dem dritten FAV in die Untermenge aufgenommen, so dass der Flanken-Akzeptanz-Vektorsatz für steigende Flanken insgesamt 5 FAVs umfasst. Selbstverständlich ist die Erfindung nicht auf diese Anzahl an FAVs als Flanken-Akzeptanz-Vektorsatz beschränkt. Bei diesem Ausführungsbeispiel darf der EMV-Einfluss auf die asymmetrische Verzögerung also nicht größer als 2 Sampling-Perioden, also ca. 25 ns groß sein. Die in Abhängigkeit von m gewählten Vektoren der Untermengen sind in Figur 4b durch einen Stern "*" gekennzeichnet.

In den Figuren 5a und 5b sind FAVs für fallende Flanken beispielhaft dargestellt, wobei links zeitlich zuerst ist. Da der Sensitivitätsbereich nur 2 Abtasttakte vor und 2 Abtasttakte nach der nominalen KFP umfasst, und alle anderen Messwerte nicht von Bedeutung sind für die Auswertung, ergeben sich in diesem Beispiel lediglich 4 FAVs. Das zum vorgegangenen Bit ('1') inverse Bit ('0') muss mindestens einmal in einem FAV enthalten sein. Deshalb ist ein Vektor ausschließlich bestehend aus Einsen nicht zugelassen.

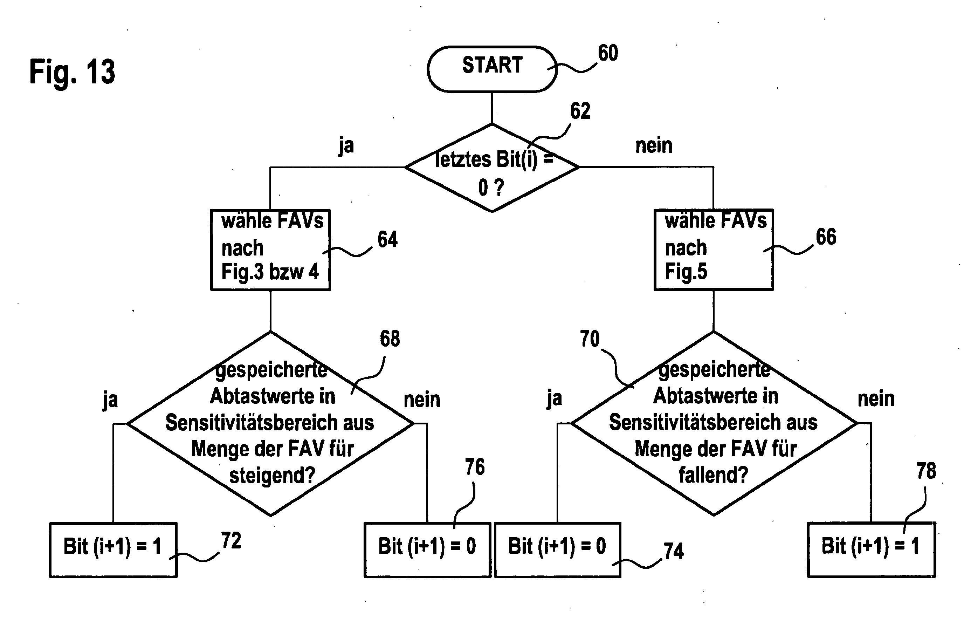

In Figur 13 ist ein Ablaufdiagramm des erfindungsgemäßen Verfahrens dargestellt. Im Rahmen der Abtastung bzw. Dekodierung werden zuerst ankommende Bits zuerst abgetastet. Das Verfahren beginnt in einem Funktionsblock 60. Vor der Abtastung eines Bits wird aufgrund des erkannten Wertes des zuvor abgetasteten Bits (i) die mögliche folgende Flanke (vgl. Figur 1) festgelegt. Zu diesem Zweck ist ein Abfrageblock 62 vorgesehen, von dem aus bei erwarteter steigender Flanke zu einem Funktionsblock 64 und bei fallender Flanke zu einem Funktionsblock 66 verzweigt wird. Falls das letzte Bit eine '0' war, ist der zutreffende Flanken-Akzeptanz-Vektorsatz entsprechend Figur 4 (bzw. Figur 3) zu wählen. Falls das letzte Bit eine '1' war, ist der zutreffende Flanken-Akzeptanz-Vektorsatz entsprechend Figur 5 zu wählen. Aufgrund dieser Festlegung wird der entsprechende Flanken-Akzeptanz-Vektorsatz bestimmt. Als nahe liegende Abwandlung ist es in der Umkehrung dieses Ablaufes auch möglich, zuerst eine Flanke zu erkennen und anschließend aufgrund der Kenntnis des vorangegangenen Datenbitwertes den Folgebitwert zu bestimmen.

Immer wenn (bei einer 8-fachen Überabtastung) 16 Abtastwerte vorliegen, wird zum Zeitpunkt BEW in einem Funktionsblock 68 bzw. 70 bewertet. Zum Beispiel wird bei dem Ausführungsbeispiel aus Figur 6 zum Zeitpunkt BEW2 der Wert von Bit #2 ermittelt. Die Bewertung kann vorteilhaft auch schon bei Erreichen der Grenze des Sensitivitätsbereichs 50, 52 erfolgen, da die Auswertung der 'X' nicht relevant ist. Wird im Rahmen der Bewertung festgestellt, dass einer der abgespeicherten FAVs, der der Menge des gewählten Flanken-Akzeptanz-Vektorsatzes angehört, so gilt die zugehörige Flanke als erkannt und der zugehörige Bitwert ist bestimmt (vgl. Funktionsblock 72 und 74). Anderenfalls ist keine Flanke erkannt und das aktuelle Bit ist das gleiche wie das Vorgängerbit (vgl. Funktionsblock 76 und 78).

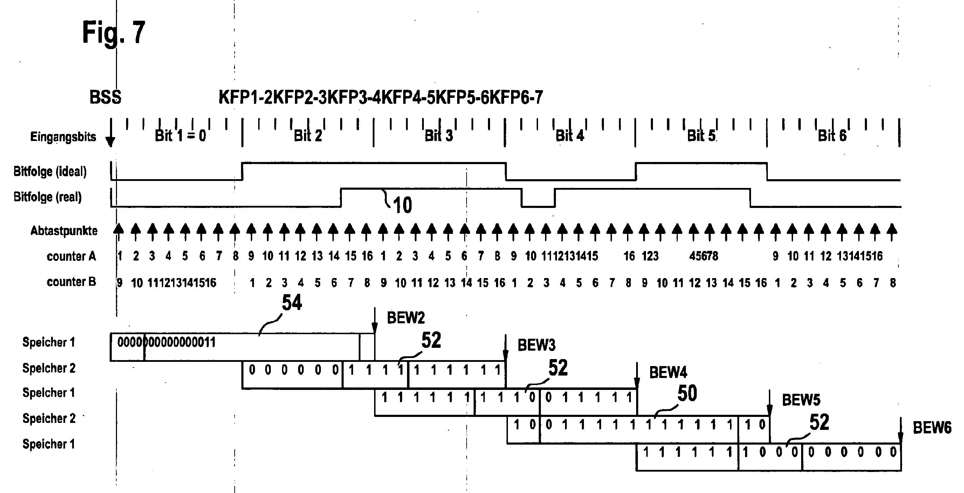

In Figur 7 ist eine einfache Abwandlung der vorliegenden Erfindung dargestellt. Dabei umfasst der Sensitivitätsbereich 54 für erwartete steigende Flanken nicht 12, sondern sogar 13 Abtastwerte. Dadurch ist es möglich, sogar noch einen steigenden Flankenwechsel bei der Position 2 vor KFP2-3 zu detektieren, was mit dem Sensitivitätsbereich 50 aus Figur 6 nicht mehr möglich wäre. Die Erweiterung des Sensitivitätsbereichs 54 um einen Abtastwert ist trotz überlappender Sensitivitätsbereiche 52, 54 möglich, ohne dass die Eindeutigkeit der Detektion gefährdet wäre.

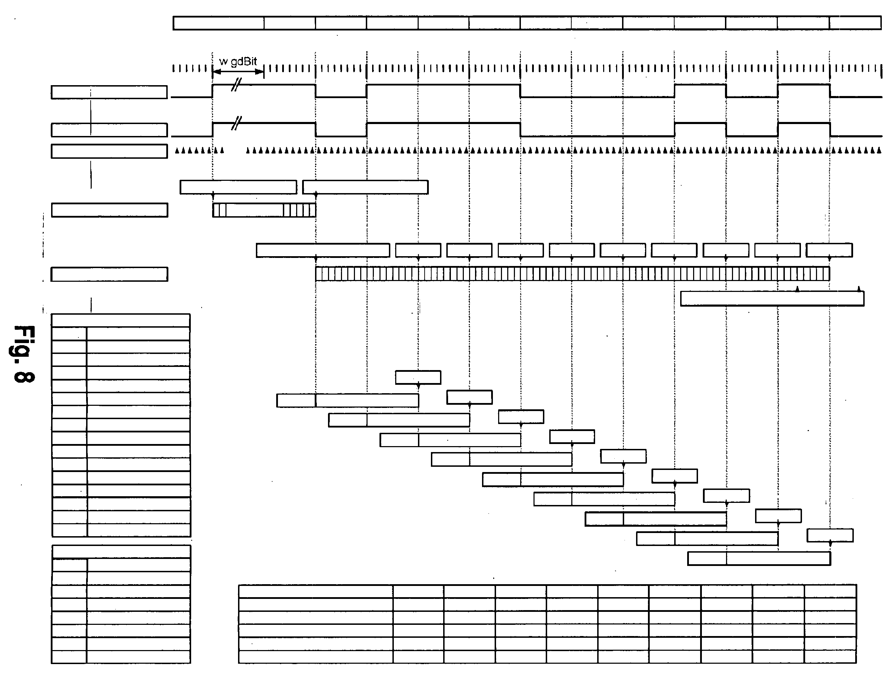

Ein weiteres Ausführungsbeispiel ist in Figur 8 beschrieben. In diesem Beispiel wird in Figur 8 zunächst angenommen, dass keine asymmetrische Verzögerung durch den Übertragungskanal vorliegt. Deshalb stimmt das von einem sendenden Teilnehmer (14) gesendete Signal "TxD Datensignal" (812) mit dem beim empfangenden Teilnehmer (36) eintreffenden Signal "RxD Datensignal" (813) überein. Zur Vereinfachung der Darstellung werden in den Beispielen grundsätzlich nur die asymmetrischen Verzögerungszeiten dargestellt, Verzögerungen beim Topologiedurchlauf werden, da diese für die Erfindung nicht relevant sind, in der Darstellung vernachlässigt. Deshalb liegen die Flanken der Signalverläufe 812 und 813 genau übereinander. Die Kann-Flanken-Positionen KFP sind wie in den Ausführungen zu Figur 6 zu verstehen. Das empfangene Datensignal 813 wird periodisch an Abtastpunkten 816 abgetastet. Die Beschreibung beginnt mit der Resynchronisation 802 des Abtastzählers 801. Zu diesem Zeitpunkt ist eine geeignete Untermenge der steigenden Flanken-Akzeptanz-Vektoren 803 bereits ausgewählt. Die Flanken-Akzeptanz-Vektoren haben in diesem Ausführungsbeispiel eine andere Charakteristik als die aus den Figuren 3a, 4a und 5a. Die hier verwendeten Flanken-Akzeptanz-Vektoren sind in den Figuren 3b, 4b und 5b dargestellt. Grundsätzlich wird aber auch hier die Regel erfüllt, dass Vektoren zur Erkennung steigender Flanken mindestens eine "1" und Vektoren zur Erkennung fallender Flanken mindestens eine "0" aufweisen müssen. Der Abtastzähler 801 wird inkrementiert, bis er 16 erreicht. Nach 16 folgt wieder 1, usw. Wenn der Zählerstand 16 erreicht ist, wird das Eingangsregister RegA (804) mit 16 aufeinander folgenden Abtastwerten gefüllt sein und der Entscheidungsalgorithmus wird für den Bewertungspunkt BEW1 (805) ausgeführt. Die Zwischenergebnisse sind in der Tabelle 815 im unteren Teil von Figur 8 jeweils in der einem Bewertungspunkt zugeordneten Spalte aufgeführt. Weil der Wert des letzten Datenbits Null war (BSS=0), ist nur eine steigende Flanke möglich. Daher ist die rlankensensitivität auf "steigend" gesetzt. Das bedeutet, dass der Inhalt des Eingangsregisters RegA (804) mit der gewählten Untermenge der steigenden Flanken-Akzeptanz-Vektoren verglichen wird. Welche der steigenden Flanken-Akzeptanz-Vektoren ausgewählt wurde, wird mit Stern "*" hinter der Vektorenbezeichnung dargestellt. Jeder der Flanken-Akzeptanz-Vektoren trägt eine Bezeichnung, z. B. "VR01" bis "VR15" usw. Der Vergleich jedes Vektors der gewählten Untermenge mit dem Inhalt des Eingangsregisters RegA (804) ergibt, dass der Vektor "VR08" dem Inhalt von RegA (804) entspricht. Daraus folgt, dass eine steigende Flanke erkannt wurde und dass daher der Wert des dekodierten Datenbits 1 eine "1" ist. Acht Abtastperioden später ist das andere Ergebnisregister RegB (807) gefüllt und der Entscheidungsalgorithmus wird für den Bewertungspunkt BEW2 (806) ausgeführt. Hier kann grundsätzlich eine fallende Flanke auftreten, da der letzte Datenwert eine "1" war. In diesem Beispiel aus Figur 8 stimmt bei BEW2 (807) aber keiner der fallenden Flankenakzeptanzvektoren mit dem Inhalt von RegB (807) überein. Daher ist keine Flanke erkannt und der Wert von Datenbit 2 ist "1". Der Bewertungspunkt BEW3 (808) führt zum selben Ablauf, das Ergebnis ist auch hier für das Datenbit 3 eine "1". Im Bewertungspunkt BEW4 (809) wird eine fallende Flanke erkannt, da der Inhalt des Eingangsregisters RegB (807) dem fallenden Flankenakzeptanzvektor VF04 entspricht. Zur Dekodierung von 8 aufeinander folgenden Datenbits, wie bei der FlexRay Protokollversion v2.1 vorgesehen, muss der Entscheidungsalgorithmus 8 mal ausgeführt werden. Dies wird in den Bewertungspunkten BEW1 (805) bis BEW 8 (810) ausgeführt. Eine zusätzliche Ausführung an BEW9 (811) ist optional, weil das Ergebnis stets "1" für BSS=1 sein muss. BEW9 (811) kann für Plausibilitätsprüfungen verwendet werden. Zur Erkennung der nächstfolgenden BSS-Flanke wird die BSS-Erkennung aktiviert (814). Dies kann beispielsweise durch in der FlexRay Spezifikation Version 2.1 veröffentlichte und funktionierende Verfahren durchgeführt werden.

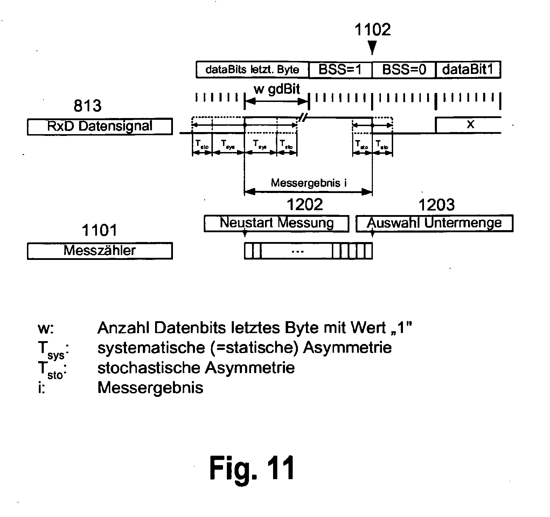

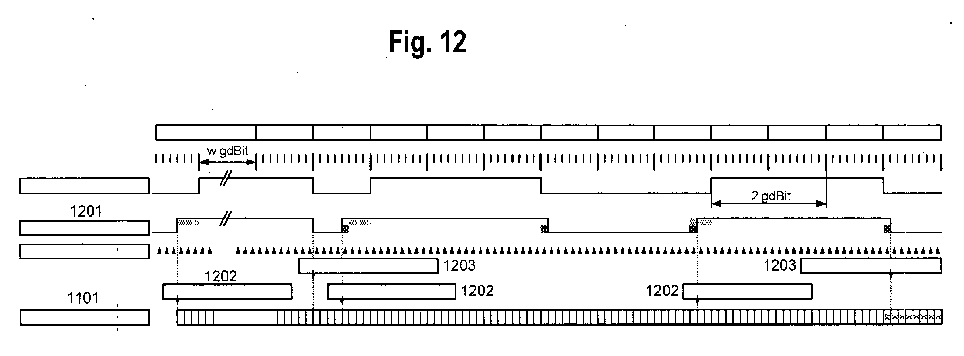

Eine vorteilhafte Ausgestaltung der Auswahl einer geeigneten Untermenge durch die Messung aufeinander folgender steigender und fallender Flanken wird in Figur 11 beschrieben. Grundsätzlich wird die Anzahl der Abtasttakte zwischen einer steigenden und einer fallenden Flanke oder auch mehrerer steigender und fallender Flanken über einen Zähler (1101) ermittelt. Im Beispiel wird für jeden Synchronisationpunkt BSS (1102) der Abstand der fallenden BSS-Flanke zur letzten vorhergehenden steigenden Flanke gemessen. Das Messergebnis sei mit i bezeichnet. Vor BSS=1 seien genau w Datenbits mit "1" identisch. Für die Auswahl der Vektoruntermenge wird der Parameter m entsprechend der Formel m = i - 8w bestimmt. Die Untermenge der Vektoren wird beispielsweise entsprechend Figur 4b in Abhängigkeit von m gewählt. Bei 8-facher Überabtastung ist die maximale Anzahl der Vektoren der Untermenge 7, um eine eindeutige Dekodierung zu gewährleisten. Theoretisch wären 8 Vektoren ebenfalls möglich, aber dies würde zu unsymmetrischer Aufteilung der Toleranzen führen. Immerhin würde dadurch die Robustheit der Dekodierung erhöht werden. Ein Messvorgang ist in Figur 12 exemplarisch dargestellt. Hier wird durch systematische asymmetrische Verzögerungszeiten jede steigende Flanke gegenüber der fallenden BSS-Flanke um 3 Abtastperioden nach "früh" verschoben. Ein zusätzlicher stochastischer Jitter von einer Abtastperiode führt zum empfangenen Signal "RxD Datensignal" (1201). Der Messzähler wird mit der ersten steigenden Flanke nach der BSS-Flanke gestartet (1202) (beginnt also von 1 zu inkrementieren). Der Messzähler wird in jeder Abtastperiode solange inkrementiert, bis eine fallende Flanke erkannt wird. Der Zustand des Messzählers verbleibt undefiniert (logisch "X"), bis die nächste steigende Flanke auftritt . Die Messung wird mit Zählerstand "1" mit der nächsten steigenden Flanke gestartet (1202). In Figur 12 befinden sich zwei Datenbits mit Wert "1" vor BSS=1, daher wird w in diesem Beispiel zu 2 gesetzt. Der Endstand des Messzählers ist i = 27. Daher wird m berechnet zu m = i - 8w = 27 -16 = 11. Deshalb ist aus Figur 4b die Untermenge entsprechend der Tabelle mit der Überschrift m = 11 zu wählen. Die Auswahl der Untermenge erfolgt mit der Erkennung der fallenden BSS-Flanke (1203).

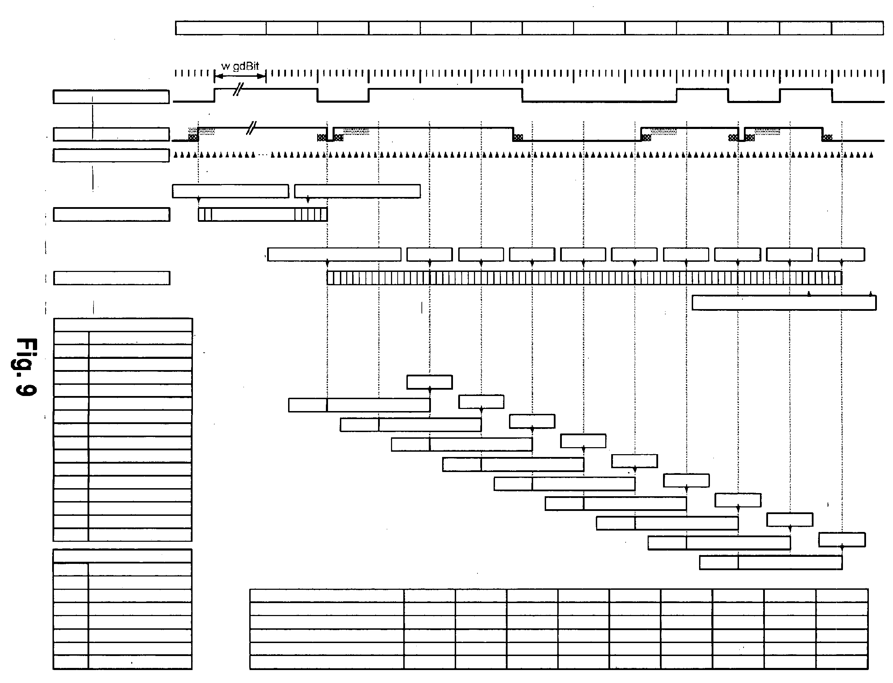

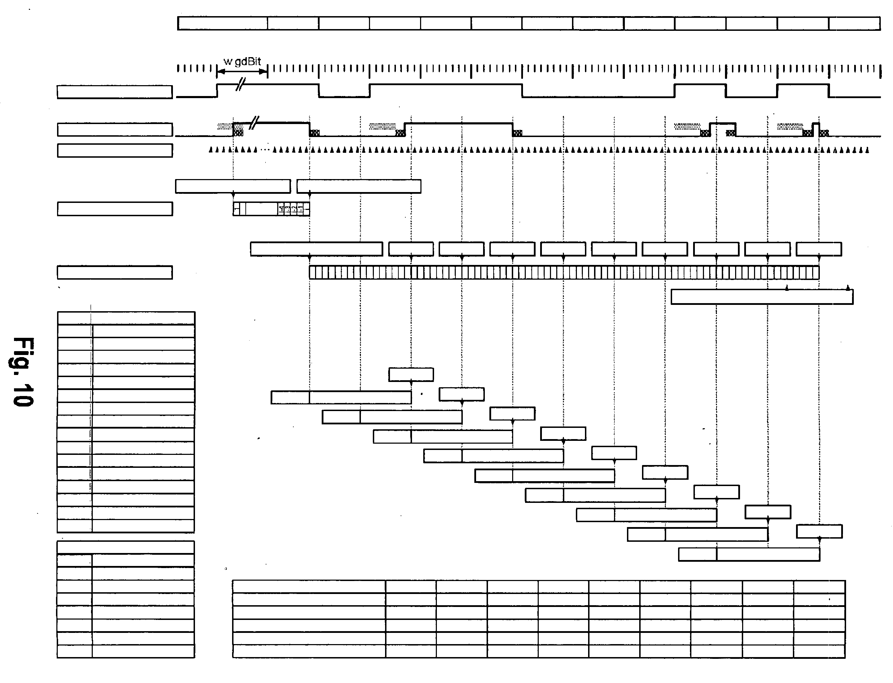

Zur weiteren Veranschaulichung wird in Figur 9 ein Dekodierungsbeispiel mit maximaler Asymmetrie nach "früh" und in Figur 10 mit maximaler Asymmetrie nach "spät" dargestellt. In diesen Figuren wirkt die statische (=systematische) Asymmetrie 901 durch Verschiebung der steigenden Flanken gegenüber der fallenden, während die stochastische Asymmetrie 902 zusätzlich auf jede Flanke wirkt.

Die zusätzlichen Vektoren "VRrec" und "VFrec" lassen den Dekoder im Auftretensfall kurzer Störungen auf der Signalleitung nach kurzfristiger falscher Dekodierung wieder in einen korrekten Ablauf übergehen. Dadurch ist zwar keine Fehlervermeidung oder Fehlerkorrektur möglich, es wird aber sichergestellt, dass der für eine Fehlererkennung maßgebliche Hammingabstand nicht überschritten wird. Die Vektoren "VRrec" und "VFrec" können auch weniger signifikante "1" bzw. "0" aufweisen als im Beispiel gezeigt.

Gemäß der vorliegenden Erfindung umfasst ein Kommunikations-Controller vorteilhaft zwei Speicher, vorzugsweise zwei 16 Bit Speicher, die abwechselnd beschrieben werden. Das Abspeichern wird angesteuert von den beiden Zählern A und B mit Wertebereich 16, die bei jedem Abtasttakt (Sampling-Periode) inkrementiert werden. Ein Speicher wird mit dem ersten Sampling Bit der Kann-Flankenwechsel-Abtastung beschrieben, wenn der zugehörige Zähler A, B auf '1' steht, usw. Denkbar sind aber auch kleinere Speicher, die Vergleiche in kurzen Segmenten umfassend mindestens 1 Bit ermöglichen.

Durch die Definition und Einhaltung von Randbedingungen, kann das erfindungsgemäße Verfahren vereinfacht und beschleunigt werden. Die Summe der Abtasttakte darf für zwei aufeinander folgende Sensitivitätsbereiche (bei 8-fach -Überabtastung)- 16 nicht überschreiten. Die Filterwirkung der Majority-Voting-Machine muss berücksichtigt werden. Bei der Bestimmung des maximal zulässigen Zeitbudgets für die asymmetrischen Verzögerungszeiten muss der Zeitdiskretisierungsfehler der Abtastung berücksichtigt werden. Insbesondere dient der FAV, der ausschließlich '0' bzw. '1' im Sensitivitätsbereich enthält, zur Kompensation des Zeitdiskretisierungsfehlers. In dem Beispiel aus Figur 8 sind bei Ausschöpfung aller FAVs mindestens folgende asymmetrischen Gesamtverzögerungen zulässig:
- +/- 7 Abtasttakte für Unterschied fallende zu steigender Flanke (also max. 87,5 ns bei 12,5 ns Samplingperiodendauer)
- +/- 3 Abtasttakte für Unterschied fallende zu fallender Flanke (also 37,5 ns)

Einige der möglichen Variationen der Erfindung sind nachfolgend beispielhaft angeführt: Statt durch Auswerten von Vektoren (was einer Kombinatorik entsprechen kann), können die Flankenwechsel auch auf andere Weise detektiert werden, wobei die Position der erkannten Wechsel in Bezug auf den Zählerstand der Zähler A, B ermittelt wird. Die Position erlaubt die Bewertung des aktuellen Bitwertes. Die Größen der Sensitivitätsbereiche 50, 52, 54 können variiert werden. Statt einer 8-fachen Überabtastung kann ein anderes n-faches Oversampling gewählt werden. Statt einer Synchronisation auf die fallende Flanke, kann auch auf die steigende Flanke synchronisiert werden. Die Anzahl der abzutastenden Bits nach der Synchronisationsflanke kann variiert werden. Die Bewertung der abgetasteten Werte ermöglicht die Diagnose unplausibler Kombinationen als Eingangsbitfehler (z.B. oszillierende Eingangsbitströme). Der Bewertungszeitpunkt BEW muss nicht zwangsläufig nach 16 beobachteten Abtastwerten stattfinden, sondern nach Ende der Sensitivität der Bewertung, da die Bewertung der Abtastwerte außerhalb des Sensitivitätsbereichs irrelevant ist. Ein Majority-Voting fordert eine Mindestdauer den 1- bzw. 0-Phase von 2 Abtasttaktdauern. Alternativ könnte das Majortity-Voting auf zwei aufeinander folgende Flanken (steigend und fallend) des Abtasttaktes reduziert werden oder auch durch eine geeignete Wahl der Flanken-Akzeptanz-Vektoren eine Filterwirkung erzielt werden.

## Patentansprüche

1. Verfahren zur Dekodierung eines Signals (10), das über mindestens eine Verbindungsleitung (24; 34) eines Datenübertragungssystems übertragen wird, in einem das Signal (10) empfangenden Teilnehmer (36) des Datenübertragungssystems, wobei in dem Signal (10) kodierte Daten in Datenrahmen übertragen werden, die Daten bitweise seriell übertragen werden, in dem empfangenden Teilnehmer (36) jedes Bit durch eine Mehrzahl von Takten abgetastet wird, und innerhalb eines Datenrahmens Synchronisationspunkte (BSS) zum Bezug einer Abtastung für jedes empfangene Bit vorgegeben werden, **dadurch gekennzeichnet, dass**
- eine Abschätzung getroffen wird, wo sich eine für einen Flankenwechsel mögliche Position (KFP) des an dem empfangenden Teilnehmer (36) anliegenden Signals (10) befinden könnte, wobei zur Abschätzung aufgrund des erkannten Wertes des zuvor abgetasteten Bits die mögliche folgende Flanke festgelegt wird,
- das anliegende Signal (10) mindestens einen Abtasttakt vor der Position (KFP) und mindestens einen Abtasttakt nach der möglichen Position (KFP) abgetastet wird,
- die abgetasteten Werte des anliegenden Signals (10) mit zuvor ermittelten und abgespeicherten Abtastwerten verglichen werden
- und in Abhängigkeit von dem Ergebnis des Vergleichs der Wert eines zwischen zwei für einen Flankenwechsel möglichen Positionen (KFP) empfangenen Bits bestimmt wird.

2. Dekodierungsverfahren nach Anspruch 1, **dadurch gekennzeichnet, dass** die abgetasteten Werte des anliegenden Signals in beliebig großen Segmenten umfassend mindestens ein Bit mit den zuvor ermittelten und abgespeicherten Abtastwerten verglichen werden.

3. Dekodierungsverfahren nach Anspruch 1 oder 2, **dadurch gekennzeichnet, dass** die zuvor ermittelten Abtastwerte in einer geordneten Reihenfolge in mindestens einem Speicher abgespeichert werden.

4. Dekodierungsverfahren nach Anspruch 1, 2 oder 3, **dadurch gekennzeichnet, dass** die zuvor ermittelten und abgespeicherten Abtastwerte bei einer n-fachen Überabtastung des anliegenden Signals (10) maximal 2n Abtastwerte umfassen.

5. Dekodierungsverfahren nach Anspruch 3 oder 4, **dadurch gekennzeichnet, dass** in den zuvor ermittelten und abgespeicherten Abtastwerten für steigende Flanken mindestens ein Bitwert einer Eins entspricht.

6. Dekodierungsverfahren nach Anspruch 3 oder 4, **dadurch gekennzeichnet, dass** in den zuvor ermittelten und abgespeicherten Abtastwerten für fallende Flanken mindestens ein Bitwert einer Null entspricht.

7. Dekodierungsverfahren nach einem der Ansprüche 1 bis 6, **dadurch gekennzeichnet, dass** das anliegende Signal (10) bei einer n-fachen Überabtastung in einem Sensitivitätsbereich (50, 52, 54) abgetastet wird, der maximal n Abtasttakte vor der Position (KFP) und maximal n Abtasttakte nach der Position (KFP) umfasst.

8. Dekodierungsverfahren nach Anspruch 6 oder 7, **dadurch gekennzeichnet, dass** ausgehend von einem aktuellen Bitwert (i) die möglichen Richtungen der Flankenwechsel beim Übergang zu einem nachfolgenden Bitwert (i+1) ermittelt werden und je nach dem ob eine steigende oder eine fallende Flanke erwartet wird, die abgetasteten Werte aus dem Abtastbereich mit unterschiedlichen zuvor ermittelten und abgespeicherten Abtastwerten verglichen werden.

9. Dekodierungsverfahren nach einem der Ansprüche 1 bis 8, **dadurch gekennzeichnet, dass** die Verzögerung mindestens eines zwingend in einem in dem Datenübertragungssystem verwendeten Übertragungsprotokoll vorgesehenen und/oder zufällig auftretenden Wechsels von steigender zu fallender Flanke gemessen und daraus eine Tendenz der asymmetrischen Verzögerung ermittelt wird.

10. Dekodierungsverfahren nach einem der Ansprüche 1 bis 8, **dadurch gekennzeichnet, dass** die Verzögerung mindestens eines zwingend in einem in dem Datenübertragungssystem verwendeten Übertragungsprotokoll vorgesehenen und/oder zufällig auftretenden Wechsels von fallender zu steigender Flanke gemessen und daraus eine Tendenz der asymmetrischen Verzögerung ermittelt wird.

11. Dekodierungsverfahren nach Anspruch 9 oder 10, **dadurch gekennzeichnet, dass** die Messung für mehr als einen Synchronisationspunkt (BSS-Flanke) mindestens einmal durchgeführt wird.

12. Dekodierungsverfahren nach Anspruch 11, **dadurch gekennzeichnet, dass** unter Verwendung desselben Phasenbezugs zwischen abtastendem Takt und anliegendem Signal (10) Messung und Dekodierung durchgeführt werden.

13. Dekodierungsverfahren nach einem der Ansprüche 2 bis 12, **dadurch gekennzeichnet, dass** die abgespeicherten Abtastwerte mit zuvor ermittelten und abgespeicherten Werten verglichen werden und in Abhängigkeit von dem Ergebnis die Plausibilität der abgetasteten Werte bewertet wird.

14. Teilnehmer (36) eines Datenübertragungssystems, mit Mitteln (16, 18) zum Übertragen der Daten in Datenrahmen, und die Übertragungsmittel (16, 18) die Daten bitweise seriell übertragen und in dem Teilnehmer (36) Mittel (38) zum Abtasten eines jeden Bits durch eine Mehrzahl von Takten vorgesehen sind, wobei innerhalb eines Datenrahmens Synchronisationspunkte (BSS) zum Bezug einer Abtastung für jedes empfange Bit vorgegeben sind, **dadurch gekennzeichnet, dass** der Teilnehmer (36) Dekodierungsmittel (38) aufweist, welche
- eine Abschätzung treffen, wo sich eine für einen Flankenwechsel mögliche Position (KFP) des an dem empfangenden Teilnehmer (36) anliegenden Signals (10) befinden könnte, wobei zur Abschätzung aufgrund des erkannten Wertes des zuvor abgetasteten Bits die mögliche folgende Flanke festgelegt wird,
- das anliegende Signal (10) mindestens einen Abtasttakt vor der Position (KFP) und mindestens einen Abtasttakt nach der möglichen Position (KFP) abtasten,
- die abgetasteten Werte des anliegenden Signals (10) mit zuvor ermittelten und abgespeicherten Abtastwerten vergleichen
- und in Abhängigkeit von dem Ergebnis des Vergleichs der Wert eines zwischen zwei für einen Flankenwechsel möglichen Positionen (KFP) empfangenen Bits bestimmen.

15. Teilnehmer (36) nach Anspruch 14, **dadurch gekennzeichnet, dass** der Teilnehmer (36) Mittel zur Ausführung eines Verfahrens nach einem der Ansprüche 2 bis 13 aufweist.

16. Teilnehmer (36) nach Anspruch 14 oder 15, **dadurch gekennzeichnet, dass** der Teilnehmer (36) einen Speicher, einen Speicherbereich und/oder ein Register zum Abspeichern der abgetasteten Werte eines Sensitivitätsbereichs (50, 52, 54) und/oder der zuvor ermittelten und abgespeicherten Abtastwerten aufweist.

17. Teilnehmer (36) nach Anspruch 16, **dadurch gekennzeichnet, dass** der Teilnehmer (36) eine Logik aufweist, um die abgetasteten Werte des Sensitivitätsbereichs (50, 52, 54) mit den zuvor ermittelten und abgespeicherten Abtastwerten zu vergleichen.

18. Teilnehmer (36) nach einem der Ansprüche 17, **dadurch gekennzeichnet, dass** der Teilnehmer (36) eine Steuerung, vorzugsweise in Form eines Zustandsautomaten, aufweist, um die Ermittlung der Position (KFP) des anliegenden Signals (10), die Abtastung des anliegenden Signals (10), den Vergleich der abgetasteten Werte des Sensitivitätsbereichs (50, 52, 54) mit den zuvor ermittelten und abgespeicherten Abtastwerten und die Ermittlung des empfangenen Bits zu steuern.

19. Teilnehmer (36) nach einem der Ansprüche 14 bis 18, **dadurch gekennzeichnet, dass** der Teilnehmer (36) einen Zähler aufweist, um einen Zeitbezug zu mindestens einem Synchronisationspunkt herzustellen.

20. Teilnehmer (36) nach einem der Ansprüche 14 bis 19, **dadurch gekennzeichnet, dass** der Teilnehmer (36) eine Steuerung, vorzugsweise in Form eines Zustandsautomaten und einer Logik, aufweist, um die Bewertung der abgetasteten Werte auf Plausibilität zu steuern.

21. Teilnehmer (36) nach einem der Ansprüche 14 bis 20, **dadurch gekennzeichnet, dass** der Teilnehmer (36) eine Steuerung, vorzugsweise in Form eines Zustandsautomaten und einer Logik, aufweist, um einen Zähler auf einen Synchronisationspunkt zu synchronisieren.

22. Teilnehmer (36) nach einem der Ansprüche 14 bis 21, **dadurch gekennzeichnet, dass** der Teilnehmer (36) mindestens ein Register oder Speicher aufweist, um das Ergebnis der Plausibilitätsprüfung abzuspeichern.

23. Teilnehmer (37) nach einem der Ansprüche 14 bis 22, **dadurch gekennzeichnet, dass** der Teilnehmer (36) eine Logik aufweist, um aus den abgetasteten Werten des übertragenen Signals (10) einen Flankenwechsel zu erkennen.

## Claims

1. Method for decoding a signal (10), which is transmitted via at least one connecting line (24; 34) in a data transmission system, in a subscriber (36) that receives the signal (10) in the data transmission system, wherein data coded in the signal (10) are transmitted in data frames, the data are transmitted serially bit by bit, the receiving subscriber (36) samples each bit using a plurality of clock cycles, and synchronization points (BSS) are prescribed within a data frame for the reference for sampling for each received bit, **characterized in that**
- an estimate is made for where a possible position (KFP) for the signal (10) applied to the receiving subscriber (36) might be for an edge change, wherein the possible subsequent edge is stipulated for the estimate on the basis of the recognized value of the previously sampled bit,
- the applied signal (10) is sampled at least one sampling clock cycle before the position (KFP) and at least one sampling clock cycle after the possible position (KFP),
- the sampled values of the applied signal (10) are compared with previously ascertained and stored samples,
- and the result of the comparison is taken as a basis for determining the value of a bit received between two possible positions (KFP) for an edge change.

2. Decoding method according to Claim 1, **characterized in that** the sampled values of the applied signal are compared with the previously ascertained and stored samples in segments of arbitrary size comprising at least one bit.

3. Decoding method according to Claim 1 or 2, **characterized in that** the previously ascertained samples are stored in at least one memory in an organized order.

4. Decoding method according to Claim 1, 2 or 3, **characterized in that** the previously ascertained and stored samples comprise no more than 2n samples when the applied signal (10) is oversampled n times.

5. Decoding method according to Claim 3 or 4, **characterized in that** in the previously ascertained and stored samples for rising edges at least one bit value corresponds to a one.

6. Decoding method according to Claim 3 or 4, **characterized in that** in the previously ascertained and stored samples for falling edges at least one bit value corresponds to a zero.

7. Decoding method according to one of Claims 1 to 6, **characterized in that** the applied signal (10) is sampled in a sensitivity range (50, 52, 54) which comprises no more than n sampling clock cycles before the position (KFP) and no more than n sampling clock cycles after the position (KFP) in the case of n-times oversampling.

8. Decoding method according to Claim 6 or 7, **characterized in that** starting from a current bit value (i) the possible directions of the edge changes upon transition to a subsequent bit value (i+1) are ascertained, and, depending on whether a rising or a falling edge is expected, the sampled values from the sampling range are compared with various previously ascertained and stored samples.

9. Decoding method according to one of Claims 1 to 8, **characterized in that** the delay in at least one change from a rising to a falling edge which is imperatively provided in a transmission protocol used in the data transmission system and/or which occurs randomly is measured and a tendency for asymmetric delay is ascertained therefrom.

10. Decoding method according to one of Claims 1 to 8, **characterized in that** the delay in at least one change from a falling to a rising edge which is imperatively provided in a transmission protocol used in the data transmission system and/or which occurs randomly is measured and a tendency for asymmetric delay is ascertained therefrom.

11. Decoding method according to Claim 9 or 10, **characterized in that** the measurement is performed at least once for more than one synchronization point (BSS edge).

12. Decoding method according to Claim 11, **characterized in that** measurement and decoding are performed using the same phase reference between the sampling clock cycle and the applied signal (10).

13. Decoding method according to one of Claims 2 to 12, **characterized in that** the stored samples are compared with previously ascertained and stored values, and the result is taken as a basis for assessing the plausibility of the sampled values.

14. Subscriber (36) in a data transmission system, having means (16, 18) for transmitting the data in data frames, and the transmission means (16, 18) transmit the data serially bit by bit, and the subscriber (36) contains means (38) for sampling each bit using a plurality of clock cycles, wherein synchronization points (BSS) are prescribed within a data frame for the reference for sampling for each received bit, **characterized in that** the subscriber (36) has decoding means (38) which
- make an estimate for where a possible position (KFP) for the signal (10) applied to the receiving subscriber (36) might be for an edge change, wherein the possible subsequent edge is stipulated for the estimate on the basis of the recognized value of the previously sampled bit,
- sample the applied signal (10) at least one sampling clock cycle before the position (KFP) and at least one sampling clock cycle after the possible position (KFP),
- compare the sampled values of the applied signal (10) with previously ascertained and stored samples,
- and take the result of the comparison as a basis for determining the value of a bit received between two possible positions (KFP) for an edge change.

15. Subscriber (36) according to Claim 14, **characterized in that** the subscriber (36) has means for carrying out a method according to one of Claims 2 to 13.

16. Subscriber (36) according to Claim 14 or 15, **characterized in that** the subscriber (36) has a memory, a memory area and/or a register for storing the sampled values from a sensitivity range (50, 52, 54) and/or the previously ascertained and stored samples.

17. Subscriber (36) according to Claim 16, **characterized in that** the subscriber (36) has a logic unit in order to compare the sampled values from the sensitivity range (50, 52, 54) with the previously ascertained and stored samples.

18. Subscriber (36) according to Claim 17, **characterized in that** the subscriber (36) has a controller, preferably in the form of a state machine, in order to control the ascertainment of the position (KFP) of the applied signal (10), the sampling of the applied signal (10), the comparison of the sampled values from the sensitivity range (50, 52, 54) with the previously ascertained and stored samples, and the ascertainment of the received bit.

19. Subscriber (36) according to one of Claims 14 to 18, **characterized in that** the subscriber (36) has a counter in order to produce a time reference for at least one synchronization point.

20. Subscriber (36) according to one of Claims 14 to 19, **characterized in that** the subscriber (36) has a controller, preferably in the form of a state machine and a logic unit, in order to control the assessment of the sampled values for plausibility.

21. Subscriber (36) according to one of Claims 14 to 20, **characterized in that** the subscriber (36) has a controller, preferably in the form of a state machine and a logic unit, in order to synchronize a counter to a synchronization point.

22. Subscriber (36) according to one of Claims 14 to 21, **characterized in that** the subscriber (36) has at least one register or memory in order to store the result of the plausibility check.

23. Subscriber (36) according to one of Claims 14 to 22, **characterized in that** the subscriber (36) has a logic unit in order to recognize an edge change from the sampled values of the transmitted signal (10).

## Revendications

1. Procédé de décodage d'un signal (10) qui est transmis par le biais d'au moins une ligne de liaison (24 ; 34) d'un système de transmission de données, dans un abonné (36) du système de transmission de données recevant le signal (10), les données codées dans le signal (10) étant transmises dans des trames de données, les données étant transmises en série bit par bit, chaque bit étant échantillonné par une pluralité de cycles dans l'abonné (36) récepteur, et des points de synchronisation (BSS) en référence à un échantillonnage pour chaque bit reçu étant prédéfinis à l'intérieur d'une trame de données, **caractérisé en ce que**
- une estimation est effectuée de l'endroit où pourrait se trouver une position possible (KFP) pour un changement de flanc du signal (10) appliqué à l'abonné (36) récepteur, le flanc suivant possible étant déterminé en vue de l'estimation en se basant sur la valeur détectée du bit échantillonné précédemment,
- le signal (10) appliqué est échantillonné au moins un cycle d'échantillonnage avant la position (KFP) et au moins un cycle d'échantillonnage après la position possible (KFP),
- les valeurs échantillonnées du signal (10) appliqué sont comparées avec des valeurs échantillonnées déterminées et mémorisées précédemment,
- et la valeur d'un bit reçu entre deux positions possibles (KFP) pour un changement de flanc est déterminée en fonction du résultat de la comparaison.

2. Procédé de décodage selon la revendication 1, **caractérisé en ce que** les valeurs échantillonnées du signal appliqué sont comparées dans des segments de taille quelconque comprenant au moins un bit avec des valeurs échantillonnées déterminées et mémorisées précédemment.

3. Procédé de décodage selon la revendication 1 ou 2, **caractérisé en ce que** les valeurs échantillonnées déterminées précédemment sont mémorisées dans un ordre trié dans au moins une mémoire.

4. Procédé de décodage selon la revendication 1, 2 ou 3, **caractérisé en ce que** les valeurs échantillonnées déterminées et mémorisées précédemment, lors d'un suréchantillonnage n fois du signal (10) appliqué, comprennent au maximum 2n valeurs échantillonnées.

5. Procédé de décodage selon la revendication 3 ou 4, **caractérisé en ce que** dans les valeurs échantillonnées déterminées et mémorisées précédemment, pour des flancs montants, au moins une valeur binaire correspond à un 1.

6. Procédé de décodage selon la revendication 3 ou 4, **caractérisé en ce que** dans les valeurs échantillonnées déterminées et mémorisées précédemment, pour des flancs descendants, au moins une valeur binaire correspond à un 0.

7. Procédé de décodage selon l'une des revendications 1 à 6, **caractérisé en ce que** le signal (10) appliqué, dans le cas d'un suréchantillonnage n fois, est échantillonné dans une plage de sensibilité (50, 52, 54) qui comprend un maximum de n cycles d'échantillonnage avant la position (KFP) et un maximum de n cycles d'échantillonnage après la position (KFP).

8. Procédé de décodage selon la revendication 6 ou 7, **caractérisé en ce que** les directions possibles du changement de flanc lors de la transition vers une valeur binaire suivante (i+1) sont déterminées en partant d'une valeur binaire actuelle (i) et suivant que le flanc attendu est un montant ou un descendant, les valeurs échantillonnées de la plage d'échantillonnage sont comparées avec différentes valeurs échantillonnées déterminées et mémorisées précédemment.

9. Procédé de décodage selon l'une des revendications 1 à 8, **caractérisé en ce que** le retard d'au moins un changement de flanc montant en flanc descendant, obligatoirement prévu dans un protocole de transmission utilisé dans le système de transmission de données et/ou se produisant aléatoirement, est mesuré et une tendance de retard asymétrique est déterminée à partir de celui-ci.

10. Procédé de décodage selon l'une des revendications 1 à 8, **caractérisé en ce que** le retard d'au moins un changement de flanc descendant en flanc montant, obligatoirement prévu dans un protocole de transmission utilisé dans le système de transmission de données et/ou se produisant aléatoirement, est mesuré et une tendance de retard asymétrique est déterminée à partir de celui-ci.

11. Procédé de décodage selon la revendication 9 ou 10, **caractérisé en ce que** la mesure pour plus d'un point de synchronisation (flanc BSS) est effectuée au moins une fois.

12. Procédé de décodage selon la revendication 11, **caractérisé en ce que** la mesure et le décodage sont effectués en utilisant le même rapport de phase entre le cycle d'échantillonnage et le signal (10) appliqué.

13. Procédé de décodage selon l'une des revendications 2 à 12, **caractérisé en ce que** les valeurs échantillonnées mémorisées sont comparées avec des valeurs échantillonnées déterminées et mémorisées précédemment et la plausibilité des valeurs échantillonnées est évaluée en fonction du résultat.

14. Abonné (36) d'un système de transmission de données, comprenant des moyens (16, 18) pour transmettre les données dans des trames de données et les moyens de transmission (16, 18) transmettant les données en série bit par bit, et des moyens (38) d'échantillonnage de chacun des bits par une pluralité de cycles étant prévus dans l'abonné (36), des points de synchronisation (BSS) en référence à un échantillonnage pour chaque bit reçu étant prédéfinis à l'intérieur d'une trame de données, **caractérisé en ce que** l'abonné (36) présente des moyens de décodage (38) qui
- effectuent une estimation de l'endroit où pourrait se trouver une position possible (KFP) pour un changement de flanc du signal (10) appliqué à l'abonné (36) récepteur, le flanc suivant possible étant déterminé en vue de l'estimation en se basant sur la valeur détectée du bit échantillonné précédemment,
- échantillonnent le signal (10) appliqué au moins un cycle d'échantillonnage avant la position (KFP) et au moins un cycle d'échantillonnage après la position possible (KFP),
- comparent les valeurs échantillonnées du signal (10) appliqué avec des valeurs échantillonnées déterminées et mémorisées précédemment,
- et déterminent la valeur d'un bit reçu entre deux positions possibles (KFP) pour un changement de flanc en fonction du résultat de la comparaison.

15. Abonné (36) selon la revendication 14, **caractérisé en ce que** l'abonné (36) présente des moyens pour mettre en oeuvre un procédé selon l'une des revendications 2 à 13.

16. Abonné (36) selon la revendication 14 ou 15, **caractérisé en ce que** l'abonné (36) présente une mémoire, une zone de mémoire et/ou un registre pour mémoriser les valeurs échantillonnées d'une plage de sensibilité (50, 52, 54) et/ou les valeurs échantillonnées déterminées et mémorisées précédemment.

17. Abonné (36) selon la revendication 16, **caractérisé en ce que** l'abonné (36) présente une logique pour comparer les valeurs échantillonnées de la plage de sensibilité (50, 52, 54) avec les valeurs échantillonnées déterminées et mémorisées précédemment.

18. Abonné (36) selon la revendication 17, **caractérisé en ce que** l'abonné (36) présente une commande, de préférence sous la forme d'un automate d'état, pour commander la détermination de la position (KFP) du signal (10) appliqué, l'échantillonnage du signal (10) appliqué, la comparaison des valeurs échantillonnées de la plage de sensibilité (50, 52, 54) avec les valeurs échantillonnées déterminées et mémorisées précédemment et la détermination du bit reçu.

19. Abonné (36) selon l'une des revendications 14 à 18, **caractérisé en ce que** l'abonné (36) présente un compteur pour établir un rapport de temps avec au moins un point de synchronisation.

20. Abonné (36) selon l'une des revendications 14 à 19, **caractérisé en ce que** l'abonné (36) présente une commande, de préférence sous la forme d'un automate d'état et d'une logique, pour commander l'évaluation de la plausibilité des valeurs échantillonnées.

21. Abonné (36) selon l'une des revendications 14 à 20, **caractérisé en ce que** l'abonné (36) présente une commande, de préférence sous la forme d'un automate d'état et d'une logique, pour synchroniser un compteur sur un point de synchronisation.

22. Abonné (36) selon l'une des revendications 14 à 21, **caractérisé en ce que** l'abonné (36) présente au moins un registre ou une mémoire pour mémoriser le résultat du contrôle de plausibilité.

23. Abonné (36) selon l'une des revendications 14 à 22, **caractérisé en ce que** l'abonné (36) présente une logique pour détecter un changement de flanc à partir des valeurs échantillonnées du signal (10) transmis.
